# EUROPEAN PATENT APPLICATION

(11) **EP 4 845 052 A1**
(43) Date of publication of application: **25.11.2026**
(21) Application number: 25178370.0
(22) Date of filing: 22.05.2025
(51) Int. Cl.: H04B 7/185, H04W 24/02, H04W 28/08, H04W 36/34, G06N 20/00

(54) **AI-ASSISTED SATELLITE-TERRESTRIAL INTEGRATION FOR TELECOMMUNICATION NETWORKS**

(71) Applicant: Deutsche Telekom AG, 53113 Bonn (DE)
(72) Inventor: SID ALI, Badie, 53171 Bonn (DE)
(74) Representative: karo IP

(57) **Abstract**

A computer program product comprising instructions which, when executed by one or more processors of a communication system (110) comprising a non-terrestrial network (170) and a terrestrial network (160), cause the system to implement an Al module configured to receive input values (150) associated with network state and user equipment (10) mobility, to generate control parameters for at least one of handover, load balancing, or network configuration, and to provide a trigger signal to the communication system (110) if the application of the control parameters is determined to improve a network condition.

## Description

The present invention relates to the field of telecommunication networks. In particular, the invention concerns the integration of non-terrestrial networks (NTN), such as satellite communication systems, with terrestrial networks (TN), comprising 5G and/or 6G infrastructures. The invention focuses on using artificial intelligence (AI) to improve handover performance, load balancing, and/or network configuration across integrated satellite-terrestrial systems.

Modern telecommunication systems increasingly aim to integrate non-terrestrial networks (e.g., low earth orbit satellites, high orbit satellites) with terrestrial infrastructures to achieve global coverage, ultra-low latency, and reliable connectivity. However, the current state of satellite-terrestrial integration into existing terrestrial infrastructures is still immature.

In conventional communication systems:
- Satellite and terrestrial networks typically operate as independent silos with little or no coordinated decision-making.
- Handover operations between these networks are mostly manual or semi-automated, which leads to increased latency, higher error rates, and degraded user experience.
- Load balancing across the networks is inefficient due to differing performance characteristics, such as latency, bandwidth, and link stability.
- Network configuration parameters (e.g., transmission power, beamforming angles) are generally static or adjusted only through centralized control mechanisms, which cannot react quickly enough to dynamic environmental conditions like satellite orbit changes, signal degradation, or weather interference.

Such limitations significantly impair service continuity, efficiency, and performance - particularly in highly dynamic or mobile use cases.

It is therefore an object of the present invention to overcome, at least in part, the limitations of current satellite-terrestrial integration approaches. In particular, the invention aims to provide a mechanism for enabling seamless and predictive handovers between non-terrestrial and terrestrial network segments, performing intelligent and energy-aware load balancing between network layers, and/or dynamically optimizing network configuration parameters in response to real-time and forecasted network conditions.

This object is solved by the features of the independent claims.

The features of the various aspects of the invention described below or the various examples of implementation may be combined with each other, unless this is explicitly excluded or is technically impossible.

Furthermore, the terms first, second, third, and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

According to a first aspect of the invention, a computer-implemented method for managing a communication system comprising a non-terrestrial network, NTN, and a terrestrial network, TN, is disclosed, the method comprising:
implementing at least one of:
i) providing a predictive-handover-AI module configured to receive a first set of input values comprising user equipment movement data, service time of a satellite and/or satellite trajectory data, and to output handover parameters comprising a target access point and handover timing, and to provide a handover trigger signal to the communication system if the application of the handover parameters is determined to improve a network condition;
ii) providing a load-balancing-AI module configured to receive a second set of input values, including network utilization, energy consumption, latency, service time, and/or Doppler shift values, and to output traffic offload parameters indicating an amount of data traffic to be redistributed between access points within the communication system, and to provide an offload signal if the application of the traffic offload parameters is determined to improve load balancing within the communication system; and/or
iii) providing a network-configuration-optimization-AI module configured to receive a third set of input values including power headroom, signal quality metrics, required quality-of-service (QoS) values and/or environmental data, and to output a set of reconfiguration parameters for the communication system including at least one of transmission power level, antenna tilt, beamforming direction, or routing path adjustment, and to provide a reconfiguration signal if the application of the reconfiguration parameters is determined to optimize the communication system.

This defines the core functional architecture of the invention. It specifies a method that manages an integrated communication system comprising both a non-terrestrial network, e.g., a LEO satellite constellation, and a terrestrial network, e.g., having a 5G and/or 6G infrastructure. The method is implemented using at least one of three AI-based modules, each responsible for a specific network optimization task.

The predictive-handover-AI module processes dynamic parameters such as UE movement, satellite service time, and trajectory data. It outputs a target access point and handover timing, which are used to preemptively trigger handovers before degradation or interruption occurs. This is particularly beneficial in satellite-terrestrial transitions, where orbital dynamics can lead to abrupt link losses.

The load-balancing-AI module uses real-time or predicted network metrics to decide on traffic offload distributions across TN and/or NTN access points. Inputs such as latency and Doppler shift are critical in mixed topologies. The module outputs a decision only if a network-wide performance improvement is expected, avoiding unnecessary offloading.

The network-configuration-optimization-AI module adjusts physical and logical network parameters -such as antenna tilt or beamforming - based on conditions like signal quality and power headroom. This allows fine-grained optimization of infrastructure to adapt to user distribution or environmental factors (e.g., urban shadowing, weather degradation).

Each of the three modules can operate on a dedicated input set, ensuring functional independence and modularity. Moreover, the disjunctive "at least one of" formulation ensures that the method is broadly applicable while also covering partial implementations involving only one or two modules.

This modular AI-driven method provides a real-time, autonomous, and context-aware optimization framework that significantly improves handover reliability, load distribution, and configuration responsiveness. By enabling distributed intelligence across NTN and TN, the method enhances overall network robustness, energy efficiency, and quality of service - especially under dynamically changing conditions.

In an embodiment, in a rural deployment, only the predictive-handover-AI may be active, ensuring smooth transitions between satellite beams and base stations. In an urban smart city scenario, only the load-balancing-AI may offload vehicular traffic from overloaded terrestrial cells to LEO satellite links during rush hour. In a satellite gateway station, only the network-configuration-optimization-AI could dynamically adapt routing paths based on interference levels due to weather patterns. Restricting the usage to those modules that are especially suited to her current use case can lead to a faster reaction time and to a reduction of computational resources.

In an embodiment, each of the predictive-handover-AI module, the load-balancing-AI module, and/or the network-configuration-optimization-AI module is independently trained on the combined NTN-TN network to enable cross-network intelligence. Hence, each of the modules comprises its own AI.

This specifies that the AI modules are not only functionally separated but are also trained independently using data originating from both the non-terrestrial network (NTN) and the terrestrial network (TN). The independent training approach allows each AI module to develop a specialized learning strategy tailored to its respective control task - while still capturing correlations and dependencies that arise from the interaction of both network domains. As a result, the modules acquire cross-domain awareness, improving their responsiveness to mixed-network scenarios such as mobile users transitioning between satellite coverage and terrestrial base stations.

For example, the predictive-handover-AI module may be trained with both terrestrial handover logs and satellite visibility maps, enabling it to anticipate service discontinuities across infrastructure boundaries. The load-balancing AI module might use both latency and power consumption data from NTN and TN segments to learn optimal offloading strategies in coverage-overlap zones. The network-configuration-optimization-AI module could integrate environmental and QoS data from both domains to adjust antenna tilt and beam direction with respect to both local interference and satellite windowing. Training a single AI module with all of these different inputs regarding the different use cases results in an AI module that will not be able to fulfill the specialized task as well as individually trained Als.

The technical advantage of this approach is that it promotes individual decision autonomy of the different AI modules while still enabling coherent system behavior across heterogeneous infrastructures. It also improves model robustness, reduces reliance on hard-coded logic for cross-domain adaptation, and supports more granular optimization under real-world conditions involving diverse network topologies.

In an embodiment, each module applies its respective output only if an improvement in at least one network condition is predicted, the network condition comprising at least one of energy efficiency, signal quality, latency, load distribution, packet loss, or connection stability.

This specifies that any decision to apply the output of an AI module - whether a handover trigger, traffic offload command, or reconfiguration action - is subject to a conditional check that evaluates whether the output will lead to a measurable improvement in at least one relevant network performance parameter. These network conditions include fundamental indicators of system performance, such as signal quality or latency, as well as higher-level indicators like load distribution or energy consumption. By using decision making to predicted improvements, the method avoids unnecessary or counterproductive changes that could destabilize the system or degrade service quality.

In one embodiment, the predictive-handover-AI module may initiate a handover only if the predicted target access point will offer a better signal-to-noise ratio or longer service time than the current link. The load-balancing AI module might offload traffic only if the predicted new distribution reduces congestion and energy usage without introducing excessive delay. The network-configuration-optimization-AI module may apply beamforming adjustments only if they are expected to reduce packet loss or maintain the required quality-of-service level.

The technical advantage of this feature is that it ensures that the system performs intelligent, context-aware actions that are inherently outcome-oriented. It avoids oscillatory or unnecessary operations and increases the efficiency, stability, and service continuity of the network. Moreover, by relying on predictive evaluation, the system can proactively adapt to changing conditions rather than reacting only after degradation occurs.

In an embodiment,
- the output handover parameters also comprise, as predictive-AI-handover data: a signal strength, a latency, a QoS priority level, a service time, and/or a Doppler shift correction, wherein at least one of the additional predictive-AI-handover data is used in a handover-reward-function to calculate a predictive-handover score, and wherein the handover trigger signal is provided if the predictive-handover score exceeds a predefined handover threshold;
   ∘ the predictive-AI-handover data is generated by the trained AI of the predictive-handover-AI module as the best solution of state parameters associated with the handover process. For example, a certain predicted signal strength, latency, QoS priority level, service time, and/or a Doppler shift correction of a further satellite and/or a further base station to which a handover can be performed;
- the output traffic-offload parameters also comprise, as predictive-AI-traffic-offload data: a network utilization, a latency, an energy consumption, and/or a satellite power depletion rate, wherein at least one of the predictive-AI-traffic-offload data is used in a load-balancing-reward-function to calculate a predictive-load-balancing score, and wherein the offload signal is provided if the predictive-load-balancing score exceeds a predefined load-balancing threshold; and/or
   ∘ the predictive-AI-traffic-offload data is generated by the trained AI of the load-balancing-AI module as the best solution of state parameters associated to the hand-over-process. For example, a certain network utilization, latency, an energy consumption, and/or a satellite power depletion of a further satellite and/or a further base station to which traffic can be shifted;
- the output reconfiguration parameters also comprise, as predictive-AI-reconfiguration data: a signal quality, an energy consumption, a network stability, and/or a weather impact factor, wherein at least one of the additional predictive-AI-reconfiguration data is used in a reconfiguration-reward-function to calculate a predictive-reconfiguration score, and wherein the reconfiguration signal is provided if the predictive-reconfiguration score exceeds a predefined reconfiguration threshold.
   ∘ the predictive-AI-reconfiguration data is generated by the trained AI of the network-configuration-optimization-AI module as the best solution of state parameters associated to the optimization process. For example, a certain signal quality, energy consumption, network stability, and/or a weather impact factor of a further satellite and/or a further base station in operations that can be optimized;

This specifies that each AI module applies a dedicated reward function that evaluates the predicted benefit of its respective output before taking action. The predictive-handover-AI module computes a predictive-handover score based on parameters such as signal strength or Doppler shift correction. If this score indicates that a better handover target is available, a handover trigger is issued. Similarly, the load-balancing-AI module calculates a predictive-load-balancing score using inputs such as network utilization and energy consumption, and only issues an offload command when this score exceeds a predefined threshold. The network-configuration-optimization-AI module uses a predictive-reconfiguration score to evaluate potential reconfiguration actions, such as changes in antenna tilt or beamforming direction, against expected improvements in stability or signal quality.

The technical advantage is that each decision-making process is selective, proactive due to the predictive nature, and grounded in a quantitative assessment of benefit. This avoids unnecessary transitions, reduces network churn, and ensures that actions are only taken when they are expected to yield measurable improvements. The modular reward-function structure also allows for fine-grained control and tuning of each module's sensitivity and optimization goals, enabling robust operation under diverse and dynamically changing network conditions.

In an embodiment, the handover trigger signal is provided if the predictive-handover score is higher than a current-handover score, the offload signal is provided if the predictive-load-balancing score is higher than a current-load-balancing score, and/or the reconfiguration signal is provided if the predictive-reconfiguration score is higher than a current-reconfiguration score, the current scores being calculated using the same reward functions but based on current network state values.

The predictive-handover score and the current-handover score are calculated using the same reward function but based on different input data. The current-handover score is derived from actual, e.g. measured, values that describe the present state of the respective network. These values may include the current signal strength, the remaining service time of the connected satellite beam or terrestrial node, the observed latency, and any Doppler shift resulting from user or satellite movement. This score reflects the real-time benefit of maintaining the current connection.

In contrast, the predictive-handover score is computed using predicted or forecasted network parameters obtained by at least one of the AI-modules, in particular as a possible bets solution state of the network. It estimates the expected performance of a future connection based on anticipated signal strength from a new access point, projected latency and service time, and predicted QoS or utilization conditions.

This specifies that the system does not blindly act on predictions, but instead compares them to the current operational state of the network. Each of the three AI modules handover, load-balancing, and reconfiguration - only triggers its respective control signal if the predictive score indicates an improvement over the current conditions, using the same reward function for both calculations. This ensures that the network only transitions to a new state if it is genuinely beneficial.

In one embodiment, the predictive-handover score may indicate a stronger signal and longer coverage time from a new satellite beam, but the system will only initiate the handover if these predicted values yield a better score than maintaining the current link. Similarly, if the predictive-load-balancing score suggests that offloading traffic to an NTN or TN node would improve latency and energy efficiency, it will be acted upon only if this score exceeds the value calculated from the current distribution. For the reconfiguration module, even if a new beam direction appears optimal, the signal is triggered only if that configuration improves on the current performance metrics under live conditions.

The technical advantage of this logic is that it introduces a safeguard against unnecessary changes, especially in environments prone to oscillation, such as LEO satellite transitions or fluctuating urban RF conditions. It helps avoid "ping-pong" effects, increases system stability, and ensures that the AI-based decisions are both forward-looking and contextually validated. This improves user experience, conserves system resources, and supports long-term optimization strategies.

In an embodiment, at least one weight used in at least one of the scores is dynamically adjusted based on the assessed importance of the corresponding parameter. The scores comprise predictive-handover score, current-handover score, predictive-load-balancing score, current-load-balancing score, predictive-reconfiguration score, and/or current-reconfiguration score.

This specifies that the scores that typically represent a reward function used by the AI modules are not fixed in their internal weighting schemes. Instead, the system is configured to dynamically adjust the numerical weight assigned to individual input parameters depending on the assessed or learned importance of that parameter in a given operational context. For example, in calculating a predictive-handover score, the system may initially treat signal strength and service time as equally important. However, based on user mobility patterns or feedback from quality-of-service metrics, it may later adjust the weighting to emphasize service time more heavily in mobile scenarios where connection longevity is critical.

The dynamic adjustment can be performed using optimization techniques such as gradient descent, reinforcement learning, or attention-based neural network architectures. The adjustment process may occur locally within a module or be influenced by collaborative learning strategies across network elements. The weights may be updated in real time or in periodic training cycles, depending on implementation constraints and system architecture.

In one embodiment, during heavy traffic conditions, the load-balancing-AI module may increase the weight associated with latency while reducing the weight for energy consumption, thereby prioritizing throughput and user experience over efficiency. In another example, a satellite under energy constraints may prompt the reconfiguration module to increase the weight associated with power depletion rate, guiding the system toward energy-conserving configuration options.

The technical advantage of this feature is that it introduces adaptability into the optimization logic itself. Rather than relying on static, pre-configured reward criteria, the system can continuously refine its decision logic to reflect evolving network goals, environmental factors, or user demands. This leads to more effective resource allocation, more intelligent behavior, and ultimately a more resilient and efficient communication system.

In an embodiment, the handover trigger signal or offload signal initiates a data transition between access points selected from: the TN to the NTN, the NTN to the TN, the TN to the TN, or the NTN to the NTN.

This specifies that the AI-based decision-making modules are not limited to transitions across domains (i.e., between terrestrial and non-terrestrial networks), but are equally applicable to transitions within a single domain. In the case of handovers, this means the system may decide to switch a user connection not only from a terrestrial base station to a satellite, or vice versa, but also between two terrestrial base stations or between two satellite beams or nodes. Similarly, in the case of load balancing, data traffic may be offloaded not only across network layers but also within the same network type.

In one example, a predictive-handover-AI module may trigger a handover from one terrestrial node to another as a user moves across cells in an urban area. In another situation, the same module may trigger a handover from one satellite to another due to orbital movement or coverage degradation. Likewise, the load-balancing-AI module may determine that traffic should be redistributed from one TN cell to another to relieve congestion, or it may shift traffic between two satellites based on energy constraints or link quality.

The technical advantage of this claim is that it ensures broad applicability and generality of the AI decision framework. By covering all access point transition combinations, the system can optimize connectivity and resource usage across the full topological spectrum of the integrated network. This flexibility enables consistent behavior in both vertically and horizontally heterogeneous network scenarios and supports seamless service continuity for end users.

In an embodiment, the network-configuration-optimization-AI module is configured to trigger the load-balancing-AI module and/or the predictive-handover-AI module, in particular if no further network configuration optimization is achievable; the load-balancing-AI module is configured to trigger the network-configuration-optimization-AI module and/or the predictive-handover-AI module based on an assessment of available resources at alternative access points; and/or the predictive-handover-AI module is configured to trigger the load-balancing-AI module and/or the network-configuration-optimization-AI module in advance of a handover to optimize future target network conditions.

This specifies that the AI modules do not operate in complete isolation, but rather in a coupled, cooperative architecture where the outcome of one module's decision process can serve as a trigger or input for another module. This design ensures that system-level decisions are not made in a vacuum but take into account the broader impact and dependencies among different optimization tasks. For instance, if the network-configuration-optimization-AI module determines that further local adjustments (such as beamforming or antenna tilt changes) will no longer yield significant improvements, it may proactively trigger the load-balancing or handover modules to explore external alternatives. Conversely, if the load-balancing AI module identifies a potential offload target with excess capacity, it may prompt the handover module to evaluate whether a user connection should be transferred. Similarly, the handover module may initiate a request to the configuration module to pre-adjust parameters at a target access point in anticipation of a handover.

In one embodiment, when a satellite is nearing its service boundary for a given user, the predictive-handover module may begin evaluating handover targets and simultaneously notify the load-balancing module to assess whether shifting traffic to the target link will create congestion. In another embodiment, if the load-balancing module detects congestion at a terrestrial base station, it may first check whether local reconfiguration could mitigate the issue; failing that, it could trigger a handover evaluation to redistribute users to nearby access points or satellites.

The technical advantage of this interaction logic is that it adds a layer of coordination and self-awareness to the distributed decision-making architecture. It enables the system to identify situations where a single optimization axis is insufficient and to escalate or delegate control to complementary modules. This reduces the likelihood of suboptimal local minima, improves overall system responsiveness, and ensures a more intelligent allocation of network resources under dynamic and interdependent constraints.

In an embodiment, at least one of the offload signal, the reconfiguration signal, or the handover trigger signal is provided based on an evaluation of one or more predicted network parameters, and wherein at least one of the signals is issued if a deviation from a current condition is detected that improves network performance.

This specifies that Al-based decision-making in the system may also be based on direct comparisons between predicted values and current measurements of network conditions, rather than through reward functions or aggregate scores. The core idea is that if the system anticipates a deviation in a key network parameter - such as latency, signal quality, or resource availability - that would lead to an improvement in performance, it may trigger a corresponding control action. The decision logic thus evaluates the direction and magnitude of change, using prediction as a means of proactive adaptation rather than simple response.

For example, the handover trigger signal may be issued if the predicted latency of a candidate satellite connection is significantly lower than the currently measured latency of the ongoing terrestrial link. Similarly, the reconfiguration signal may be triggered if the Al predicts a future signal drop due to weather interference and determines that beamforming adjustments will compensate for it in advance. The offload signal may be issued if a sharp rise in terrestrial base station utilization is predicted and a nearby satellite is expected to remain stable and underutilized.

The technical advantage of this approach is that it enables the system to operate in scenarios where full scoring or reward modeling may not be feasible or necessary. It offers a lightweight and responsive decision path, suitable for real-time execution and conservative fallback logic. Moreover, it further illustrates the versatility of the invention in supporting both complex Al-based reward evaluation and simpler heuristic triggering, depending on system capabilities and use case requirements. This dual approach reinforces robustness and enhances the practical applicability of the solution in mixed deployment environments.

In an embodiment, the reconfiguration parameters are selected to minimize energy consumption or to maintain a target QoS level for the user equipment.

This specifies that the output of the network-configuration-optimization-AI module is not arbitrary but directed toward specific, high-value operational goals. The module generates reconfiguration parameters - such as changes in transmission power, antenna tilt, or routing paths - only if these changes are predicted to reduce energy usage or maintain a required level of service quality. The phrase "target QoS level" may refer to latency, throughput, jitter, or other key performance indicators, depending on the use case and user profile. Likewise, energy minimization may relate to base station power output, satellite battery usage, or system-level power efficiency.

The technical advantage of this claim is that it ensures that reconfiguration decisions made by the AI module contribute directly to meaningful performance objectives. It prevents overreaction to minor fluctuations or changes that would have negligible user impact. By focusing reconfiguration logic on conserving energy and preserving QoS, the system becomes more efficient, environmentally sustainable, and aligned with user expectations and service-level agreements. This adds not only functional benefit but also practical deployability across a range of network scenarios.

In an embodiment, the method further comprises receiving, from user equipment, QoS requirement values, wherein the QoS requirement values are included in the input values received by at least one of the predictive-handover-AI module, the load-balancing-AI module, or the network-configuration-optimization-AI module, and wherein the respective module generates its output, i.e., the predicted state values, based at least in part on the received QoS requirement values.

This specifies that the AI modules are not only responsive to network-side measurements and predictions but also take into account application-specific requirements provided directly by the user equipment (UE). These QoS requirement values may include latency bounds, minimum throughput, reliability thresholds, jitter sensitivity, or combinations thereof, depending on the type of service requested by the user, - such as video streaming, augmented reality, or industrial loT. The UE may transmit these QoS values periodically, at session initiation, or in response to changing user behavior or application conditions.

This embodiment further clarifies that these QoS requirements are incorporated as input values into one or more of the AI modules. Each module uses this input to influence how its outputs are generated. For example, the predictive-handover-AI module may reject a candidate handover target if the expected connection would not meet the minimum latency requirement. Similarly, the load-balancing-AI module may be biased toward offloading traffic only to those network paths or segments that are capable of satisfying the required throughput. The network-configuration-optimization-AI module may favor adjustments to transmission parameters or routing paths that best align with the user's stated QoS class.

In one embodiment, the QoS input may be standardized and mapped to predefined service profiles, such as 3GPP's QoS Class Identifiers (QCls), allowing consistent interpretation across heterogeneous network nodes. Alternatively, the system may support dynamic or proprietary QoS models, adapting to enterprise, private network, or application-level specifications.

The technical advantage of this claim is that it closes the loop between user demand and network behavior. It allows the system to deliver context-aware, personalized optimization actions that reflect real user intent. This capability enhances quality of experience, supports service-level differentiation, and ensures that AI-driven decisions align with end-to-end application requirements. Moreover, it enables the network to prioritize critical services under congestion or resource-limited conditions, improving fairness and operational efficiency.

In an embodiment, a current reward score is calculated based at least partially on currently measured system state values, a predictive reward score is calculated based on AI-predicted system state values, and an output signal is provided only if the predictive reward score exceeds the current reward score. The scores described above can be realized as respective reward functions.

This specifies that the decision to issue a control signal - whether for handover, offloading, or reconfiguration - is not based solely on prediction but is validated by comparing the predicted outcome to the system's current state. Both scores are generated using the same reward function structure, but the input data differs: the measured reward score uses real-time, observed network parameters, while the predictive reward score uses forward-looking estimates generated by the AI module. The system only proceeds with a control action if the predicted outcome is demonstrably better than the current one.

In an embodiment, the handover trigger signal is provided only if at least one of the following conditions is fulfilled, in particular to mitigate ping-pong effects:
i) the predicted service time of the target access point exceeds a predefined or dynamically adjusted service time threshold; and/or
ii) the signal strength of the target access point exceeds the signal strength of the current access point by at least a hysteresis margin.

This specifies that the handover decision made by the predictive-handover-AI module is subject to at least one additional control condition that protects the system against instability due to unnecessary or excessive handovers, commonly known as the ping-pong effect. The first condition ensures that a handover is not performed unless the target access point - such as a satellite or terrestrial node - is expected to provide service for a sufficiently long time. The second condition introduces a hysteresis margin into the evaluation of signal strength, requiring the target's signal to be significantly better than the current link before a switch is allowed.

The service time threshold may be static or dynamically adapted based on satellite trajectory, UE velocity, or historical session data. For example, in LEO satellite networks, where beams shift rapidly, a threshold of 3 to 5 minutes might be applied to avoid switching to satellites that will soon exit the coverage zone. This condition helps prioritize stable connections and avoids mid-session dropouts.

The hysteresis margin condition provides a safeguard against fluctuating signal strength levels caused by noise, movement, or minor orientation changes. By requiring a target signal to exceed the current signal by a margin (e.g., 3 dB), the system filters out trivial variations and ensures that a handover is initiated only when a meaningful improvement is expected.

In one embodiment, both mechanisms may be combined: the handover will only be initiated if the target satellite has a remaining service time greater than a context-aware threshold and provides a signal that exceeds the current one by the defined hysteresis margin. In other use cases, only one of the conditions may be used depending on network policies or performance goals.

The technical advantage of this claim is that it introduces explicit safeguards into the handover logic, making the system more stable and service-aware. It reduces the risk of frequent handovers, improves user experience, protects battery life (especially in power-constrained satellites), and minimizes signaling load. Moreover, these mechanisms are highly relevant in NTN deployments, where link conditions change rapidly due to orbital dynamics and mobility profiles.

According to a second aspect of the invention, a handover control entity is disclosed that is configured to implement the predictive-handover-Al module described above, the entity comprising a processor and a memory storing instructions which, when executed, cause the entity to receive input values comprising user equipment movement data, service time of a satellite, and/or satellite trajectory data; output handover parameters comprising a target access point and handover timing; and provide a handover trigger signal if the application of the handover parameters is determined to improve a network condition.

The handover control entity is in particular configured to execute the steps of the method described above to which it is technically related.

This specifies a dedicated control entity that executes the logic of the predictive-handover-Al module. It is implemented as a computing unit with access to memory and processing capabilities and is responsible for monitoring movement patterns of user equipment (UE), satellite trajectory data, and satellite service time windows. Based on these inputs, the entity predicts handover needs and calculates not only when a handover should occur but also which access point - either terrestrial or non-terrestrial - should become the new connection point. If the predicted benefit meets the required criteria, a handover trigger signal is sent to the communication system.

The handover control entity can be deployed in various parts of the communication architecture. When implemented in a terrestrial base station (e.g., gNB or eNB), the entity has immediate access to local UE telemetry and low-latency control interfaces, allowing for rapid handover execution. The drawback is that visibility is limited to the base station's local scope, which may not account for system-wide traffic or satellite behavior. When implemented in a satellite node, the entity has predictive knowledge of its own movement and beam schedule, which is advantageous for managing satellite-to-satellite or satellite-to-terrestrial handovers. However, resource constraints and communication delays can limit decision complexity. When placed on an edge server, such as a mobile edge computing (MEC) node, the entity benefits from moderate computational power and latency while retaining more global context than a base station. A centralized core network server or ground control center can provide full-system visibility and optimized decision-making but introduces latency and scalability concerns. Finally, satellite ground stations may combine predictive orbital knowledge with back-end telemetry aggregation but may be constrained in reacting to real-time UE movement data.

The technical advantage of the handover control entity is that it offloads decision-making from centralized systems and enables localized, predictive optimization. This architecture supports handovers that are initiated not reactively but based on anticipated degradation or opportunity, improving user experience, maintaining continuous service during satellite transitions, and reducing the risk of dropped sessions. Furthermore, the modular design allows network operators to deploy this intelligence flexibly, tailoring responsiveness and scope depending on the use case, infrastructure, and service model.

According to a third aspect of the invention, a load control entity is disclosed that is configured to implement the load-balancing-AI module, the entity comprising a processor and a memory storing instructions which, when executed, cause the entity to receive input values including network utilization, energy consumption, latency, service time, and/or Doppler shift values; output traffic offload parameters indicating an amount of data traffic to be redistributed; and provide an offload signal if the application of the traffic offload parameters is determined to improve load balancing within a communication system.

The load control entity is in particular configured to execute the steps of the method described above, to which it is technically related.

This specifies a functional entity designed to autonomously manage data traffic distribution across network nodes. The load control entity can use current and/or possibly predicted input values - such as the real-time utilization of various access points, estimated energy consumption (especially for satellites), latency measurements, service duration forecasts, and Doppler shift data - to evaluate how traffic should be dynamically redistributed to optimize load balance. If the expected benefit exceeds a decision threshold, the entity issues an offload signal, prompting the redistribution of data traffic across TN and/or NTN resources.

The load control entity can be implemented in various architectural layers of the communication system. When located in a terrestrial base station, the entity can perform localized load management and quickly react to nearby congestion, although its system-level visibility may be limited. If implemented on a satellite, the entity can manage load balancing across different satellite beams or satellite-ground channels, which is particularly useful in LEO constellations where link availability changes dynamically. In an edge server deployment, the entity benefits from access to region-wide data with lower latency than a central server, making it suitable for near-real-time decisions in urban or distributed environments. If placed in a central network controller, the entity can perform global load optimization across TN and NTN domains simultaneously, although latency and scalability challenges may apply in dense deployments. Additionally, a satellite ground station may implement this logic for constellation-aware traffic steering, combining network-wide utilization insights with satellite telemetry. Each deployment offers trade-offs. Base stations and satellites enable fast decisions with limited scope, edge servers strike a balance between responsiveness and regional coordination, and core systems offer deep optimization at the cost of reaction speed. The load control entity may also interact with power management modules, especially in satellite systems where energy constraints are tightly coupled to offloading decisions.

According to a fourth aspect of the invention, a network optimization entity is disclosed that is configured to implement a network-configuration-optimization-AI module, the entity comprising a processor and a memory storing instructions which, when executed, cause the entity to receive input values including power headroom, signal quality metrics, required quality-of-service values, and/or environmental data; Output reconfiguration parameters for a communication system, including at least one of transmission power level, antenna tilt, beamforming direction, or routing path adjustment, and provide a reconfiguration signal if the application of the reconfiguration parameters is determined to optimize the communication system.

The network optimization entity is in particular configured to execute the steps of the method described above, to which it is technically related.

This specifies a dedicated control entity that focuses on adapting the configuration of the network infrastructure to optimize performance under changing environmental, operational, or demand-related conditions. The entity can use input values such as power headroom (e.g., the margin available before reaching power limits), signal quality metrics (such as RSRP or SINR), QoS requirements (provided by users or services), and environmental data (e.g., atmospheric interference, precipitation models, or satellite shadowing conditions). Based on these inputs, it generates a set of reconfiguration parameters, including but not limited to adjustments in transmission power, antenna tilt, beamforming direction, or routing logic. If these changes are expected to yield a measurable improvement in system performance, the entity issues a reconfiguration signal to execute them.

The network optimization entity can be implemented in several locations across the communication architecture. When deployed in a terrestrial base station, it enables localized reconfiguration of radio parameters based on real-time radio conditions, offering fast reaction to signal degradation or cell overload. However, its global coordination capability may be limited. When placed in a satellite, particularly in regenerative payload architectures, it can autonomously adjust power, beam patterns, or onboard routing to improve link conditions without relying on ground command latency. An edge server deployment allows the entity to coordinate optimizations across clusters of access points, balancing responsiveness with regional awareness. If implemented in a core network control center, the entity can perform global route adjustments or resource allocation across the entire system, though at the cost of latency and centralized bottlenecks. Satellite ground stations are well-positioned to interpret large-scale environmental data (e.g., satellite weather models) and orchestrate reconfigurations across satellites and terrestrial backhaul links.

Each deployment context presents advantages and constraints. Onboard or local implementations enable fast, autonomous adaptation with minimal signaling delay. Edge-based deployments support distributed, coordinated optimizations with moderate scalability. Central deployments enable broader, systemic reconfigurations but may be less responsive in fast-changing conditions.

According to a fifth aspect of the invention, a communication system comprises at least one non-terrestrial network, NTN, and at least one terrestrial network, TN, the communication system being configured to carry out the steps of the method described above. The TN network can comprise 5G and/or 6G techniques. The communication system can comprise the handover control entity, load control entity and/or network optimization entity.

This specifies a complete communication system that includes at least one segment operating as a non-terrestrial network - such as a satellite constellation, high-altitude platform (HAPS), or aerial relay - and at least one terrestrial network, which may comprise mobile base stations, fixed access nodes, and terrestrial backhaul. The distinguishing feature of this system is that it is configured to perform all or part of the steps defined in the method claims, including the execution of AI-driven decision logic for handovers, load balancing, and configuration optimization.

The system may implement one or more of the AI modules at different layers of the infrastructure, depending on deployment preferences and architectural constraints. For instance, a low earth orbit (LEO) satellite network could act as the NTN and interoperate with a 5G terrestrial network. The AI logic may be distributed across satellite gateways, terrestrial base stations, edge nodes, and core network functions. The system can support full integration or hybrid operation, depending on whether full or partial AI module deployment is applied.

According to a sixth aspect of the invention, a computer program is disclosed product comprising instructions that, when executed by one or more processors of a communication system comprising a non-terrestrial network, NTN, and a terrestrial network, TN, cause the system to implement an AI module configured to receive input values associated with network state and user equipment mobility, to generate control parameters for at least one of: handover, load balancing, or network configuration, and to provide a trigger signal to the communication system if the application of the control parameters is determined to improve a network condition.

In an embodiment, the computer program product is disclosed that comprises instructions that, when executed by one or more processors of a communication system, cause the system to carry out the steps of the embodiments of the method described above, in particular the steps of the method according to any one of claims 1 to 10.

### Figures

In the following, preferred implementation examples of the present invention are explained with reference to the accompanying figure:
- Fig. 1:: shows the state-of-the-art 5G-NTN topology;
- Fig. 2:: illustrates a communication system as an inventive AI-enhanced 5G-NTN topology;
- Fig. 3:: illustrates another embodiment of the communication system with respect to a 6G AI-optimized architecture;
- Fig. 4:: shows hardware deployments and minimum specifications of Fig. 3;
- Fig. 5:: illustrates an inventive AI-driven handover process;
- Fig. 6:: shows the workflow of Fig. 5;
- Fig. 7:: shows an AI model architecture of the handover process;
- Fig. 8:: shows an detailed layer architecture diagram of Fig. 7;
- Fig. 9:: illustrates an inventive AI-driven load balancing process;
- Fig. 10:: illustrates an inventive AI-driven network-configuration-optimization process;
- Fig. 11:: illustrates the inventive AI-driven handover process in a further embodiment;
- Fig. 12:: illustrates the inventive AI-driven load balancing process in a further embodiment;
- Fig. 13:: illustrates yet a further aspect of the load balancing process of Fig. 12;
- Fig. 14:: illustrates the inventive AI-driven network-configuration-optimization in a further embodiment;
- Fig. 15:: illustrates an inventive computer-implemented method implemented in an inventive communication system;
- Fig. 16:: illustrates a possible technical deployment of the invention;
- Fig. 17:: illustrates a federated learning scheme within the communication system;
- Fig. 18:: illustrates countermeasures to avoid "ping-pong" effects in communication system;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

Within the context of the invention, it is to be understood that a state value signal quality can comprise the signal strength. In particular, the signal strength is a special embodiment of the parameter of the signal quality. However, signal quality can also comprise error rates, latency, and so on.

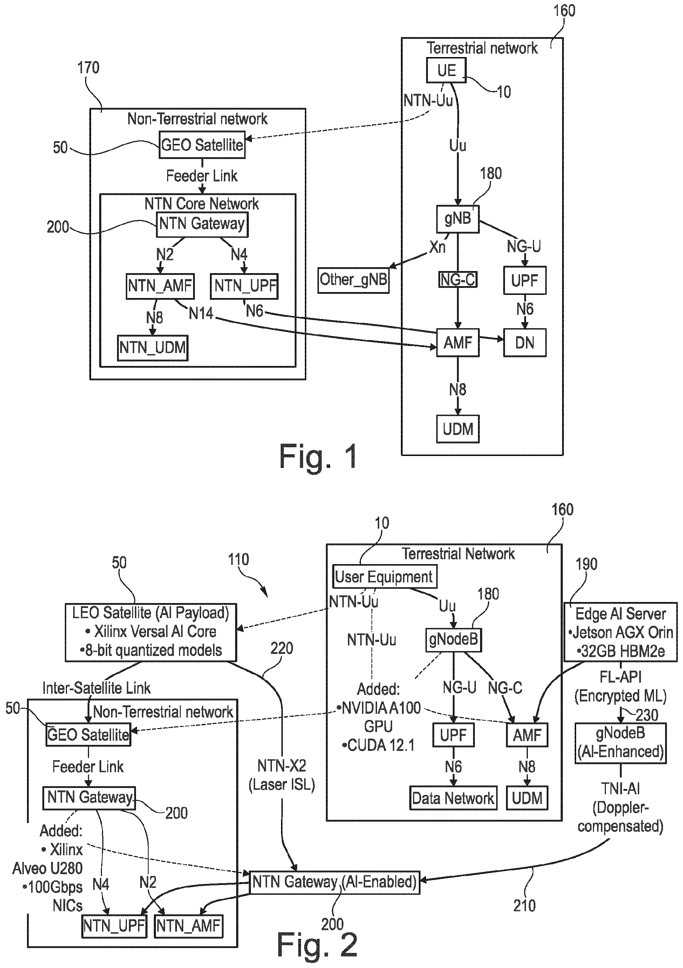

Fig. 1 illustrates a conventional 5G network topology comprising a terrestrial network 160 and a non-terrestrial network 170, each forming a logically and functionally separate domain. In this architecture, the two network segments operate independently, with minimal coordination and no Al-based integration or decision-making.

Within the terrestrial network 160, a user equipment 10 connects to a base station 180 --- specifically a gNodeB 180 --- via a Uu radio interface. The base station 180 interfaces with the 5G core network using standardized protocols: the NG-C interface for control-plane communication with the Access and Mobility Management Function (AMF) and the NG-U interface for user-plane data transmission toward the User Plane Function (UPF). The AMF further connects to the Unified Data Management (UDM) entity through the N8 interface, while the UPF connects to a data network (DN) via the N6 interface. To manage mobility and handovers within the terrestrial domain, neighboring gNodeBs coordinate using the Xn interface, supporting intra-domain cell transitions without requiring external orchestration.

In the non-terrestrial network 170, communication begins with a satellite 50, such as a geostationary (GEO) satellite equipped with a transparent bent-pipe payload. These payloads act as passive repeaters and do not perform onboard signal processing. The satellite 50 forms a link with user equipment 10 via the NTN-Uu interface and forwards signals through a feeder link to an NTN gateway 200 on the ground.

The NTN gateway 200 acts as the entry point to the dedicated NTN core network, which mirrors the functional architecture of the terrestrial core but remains logically separated. It includes components such as an NTN-specific AMF, UPF, and UDM, connected via standard 3GPP interfaces: N2 for AMF, N4 for UPF, and N8 for UDM. This duplication of functional elements reinforces the architectural separation of the two network domains.

A limited interaction exists between the terrestrial and non-terrestrial domains through the N14 interface, which connects the AMFs of the respective core networks. However, this link is static and protocol-limited, enabling only basic interworking functions such as registration update or context sharing.

Each network segment performs its control and resource allocation independently, resulting in suboptimal performance when transitioning between domains or when attempting to optimize joint load distribution and QoS adherence.

Fig. 2 illustrates an enhanced architecture in which artificial intelligence (AI) functionality is integrated into a hybrid 5G/non-terrestrial network (NTN) communication system 110 through hardware augmentation and interface-level innovations. This configuration improves handover prediction, load balancing, and/or network optimization while maintaining compatibility with existing 5G infrastructure.

In the terrestrial network 160, a base station 180, in particular a gNodeB 180, is upgraded with a high-performance NVIDIA A100 GPU or a CUDA 12.1. E.g., this hardware enables the execution of LSTM-based models for predictive handover evaluation, contributing to the functionality of a predictive-handover-AI module 120. The gNodeB 180 connects via the NG-C and NG-U interfaces to core network functions, including the AMF and UPF, which interact with the user equipment 10 through the standard Uu interface.

An edge server 190, located at the network edge, is equipped with a Jetson AGX Orin processor and 32 GB of HBM2e memory. This hardware supports local AI inference and the coordination of federated learning operations. Encrypted model updates are exchanged between the edge server 190 and the wider AI system using a secure interface denoted as FL-API 230, which ensures data privacy through mechanisms such as AES-256-GCM encryption. The FL-API 230 is described in "IEEE JSAC Special Issue (2024): Federated Learning in 6G NTNs," which is herewith fully incorporated in the disclosure of the invention.

To enable AI-driven cross-domain coordination, the system introduces the TNI-AI interface 210, a high-speed terrestrial-satellite control interface designed to perform Doppler-compensated exchanges within a latency budget of less than 5 milliseconds. Details about the TNI-Al interface 210 can be found in "3GPP TR 38.811: 'Study on New Radio (NR) to support non-terrestrial networks' (Section 6.3.4 discusses TN-NTN interworking)," which is herewith fully incorporated in the disclosure of the invention. This interface connects to gNodeBs 180 enhanced with AI capabilities and supports the real-time operation of modules such as a load-balancing-AI module 130 and a network-configuration-optimization-AI module 140.

On the non-terrestrial side, the architecture includes satellites 50 in both low Earth orbit (LEO) and geostationary orbit (GEO). LEO satellites are equipped with embedded AI hardware, specifically Xilinx Versal Al cores capable of running 8-bit quantized models.

These satellites 50 can perform local processing tasks, such as trajectory-aware handover prediction or satellite-to-satellite routing decisions.

An NTN gateway 200, which interfaces with the core NTN infrastructure, is equipped with a Xilinx Alveo U280 FPGA and 100 Gbps-capable network interface controllers (NICs). This NTN gateway 200 is capable of performing real-time Doppler compensation, facilitating low-latency data transfers and efficient communication between NTN and terrestrial segments.

A NTN-X2 interface 220 represents a laser-based inter-satellite communication link, enabling direct, high-throughput connectivity between satellites 50 at rates up to 100 Gbps. 2. The NTN-X2 interface 220 is described in "3GPP TR 38.874: 'NR; Study on AI/ML for NR Air Interface' (Section 5.2.3 discusses Xn-AI extensions)" which is herewith fully incorporated in the disclosure of the invention. This infrastructure supports rapid propagation of inference results and training updates between AI-enabled LEO and GEO nodes.

Despite these upgrades, the system preserves architectural backward compatibility, ensuring integration with existing NG-RAN and 5G core networks. All described enhancements enable the AI-driven operation of the communication system 110, specifically supporting dynamic network optimization through the coordinated actions of AI modules 120, 130, and 140.

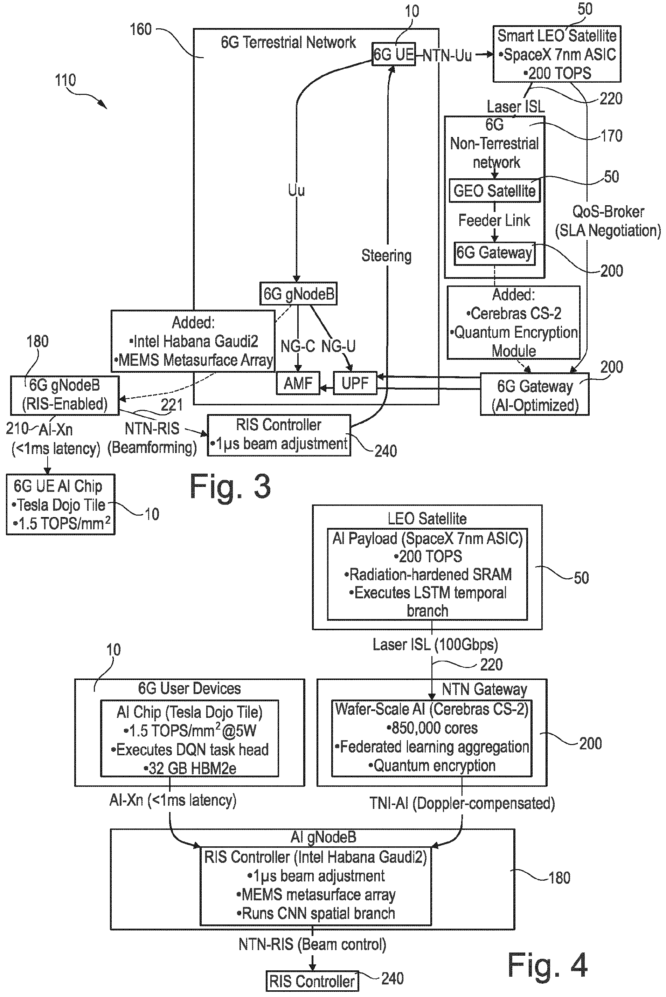

Fig. 3 illustrates another embodiment of the communication system 110with respect to a 6G AI-optimized architecture. Fig. 3 illustrates a communication system 110 comprising a terrestrial network 160 and a non-terrestrial network 170, each augmented with dedicated AI capabilities to enable predictive control, load balancing, and real-time reconfiguration across all layers.

In the terrestrial network 160, a base station 180 is configured as a 6G gNodeB 180 and enhanced with an Intel Habana Gaudi2 AI processor and a metasurface-based antenna array. The array functions as a reconfigurable intelligent surface (RIS), enabling dynamic beam steering under the control of a RIS controller 240 with a steering resolution of 1 µs. Beamforming instructions are received over a dedicated NTN-RIS interface 221, which supports optimized signal alignment in conjunction with predictions generated by LSTM-based models. The NTN-RIS interface 221 is described in "IEEE TAP 2023: "RIS-Assisted LEO Satellite Handovers" which is herewith fully incorporated in the disclosure of the invention.

A 6G user equipment 10 is equipped with a Tesla Dojo tile AI processor providing 1.5 TOPS/mm², enabling real-time inference and participation in distributed learning schemes. This user equipment 10 interacts with the base station 180 via the Uu and NTN-Uu radio interfaces, depending on the network access point, e.g. with the satellite 50.

The system utilizes a low-latency AI-Xn interface 210 to coordinate predictive handovers and control exchanges between the UE 10 and the gNodeB 180, with a response time of less than 1 ms. This interface supports the operation of the predictive-handover-AI module 120 deployed in the gNodeB 180 and the UE 10.

On the NTN side, a LEO satellite 50 is equipped with a SpaceX-manufactured 7nm AI ASIC capable of 200 TOPS, which can support on-board reinforcement learning. This satellite 50 forms part of a meshed NTN constellation, connected to other satellites 50 and to GEO satellites 50 via laser-based inter-satellite links 220.

Data relayed via feeder links reaches an NTN gateway 200, which includes a Cerebras CS-2 wafer-scale Al system with quantum-safe coordination logic and encryption capabilities. This gateway 200 forms the AI-optimized access point to the NTN core, and coordinates service-level negotiation through a QoS-Broker interface 220, which enables SLA-based cross-domain coordination between the TN and NTN.

The entire system preserves compatibility with legacy 5G interfaces (e.g. N2, N4, N6, N8), but introduces additional AI-native control channels and distributed intelligence to enable proactive handover, energy-aware load balancing, and QoS-aware reconfiguration, each governed respectively by the AI modules 120, 130, and 140.

Fig. 4 illustrates a possible hardware deployment scenario for AI model execution within the communication system 110.

At the user equipment 10 level, AI inference is executed using a Tesla Dojo tile-based chip delivering 1.5 TOPS/mm² at 5 W. The chip runs the DQN task head used by the load-balancing-AI module 130, and is equipped with 32 GB HBM2e memory to support real-time decision-making and participation in federated learning. The user device 10 is linked to its access point via the AI-Xn interface 210.

In the NTN domain, the LEO satellite 50 is equipped with an onboard AI payload comprising a SpaceX 7nm ASIC capable of 200 TOPS. The payload operates with radiation-hardened SRAM and executes the LSTM temporal branch of the predictive-handover-AI module 120, enabling trajectory prediction and satellite selection.

The NTN gateway 200 hosts a Cerebras CS-2 wafer-scale processor with over 850,000 cores. This processor performs federated learning aggregation and supports secure coordination using quantum encryption mechanisms. Doppler-compensated data exchange with terrestrial components is conducted via the TNI-AI interface 210.

Within the gNodeB 180, a RIS controller 240 - based on the Intel Habana Gaudi2 platform - handles spatial CNN execution and real-time RIS configuration. It is connected to the RIS metasurface array and supports beam control via the NTN-RIS interface 220.

These deployments collectively execute a hybrid AI stack comprising LSTM (temporal prediction), DQN (reinforcement learning), and CNN (spatial optimization) models. This configuration supports the dynamic operation of the Al modules 120, 130, and 140 and satisfies latency and resiliency requirements for 6G hybrid network deployments.

**Table 1 shows key improvements of the invention over the current 5G system.**

| Aspect | Current 5G-NTN | AI-Assisted 5G and/or 6G Integration |
|---|---|---|
| Handover Trigger | Reactive (UE-initiated measurements) | Proactive (AI predicts and initiates) |
| Decision Criteria | Static QoS and signal thresholds | Dynamic AI score with real-time parameters |
| Latency | High (manual coordination) | Ultra-low (edge-based AI inference) |
| Ping-Pong Mitigation | Limited (hysteresis margins) | Al-driven trajectory prediction + QoS rules |
| Interfaces | Proprietary satellite links | Standardized 6G APIs + federated learning |

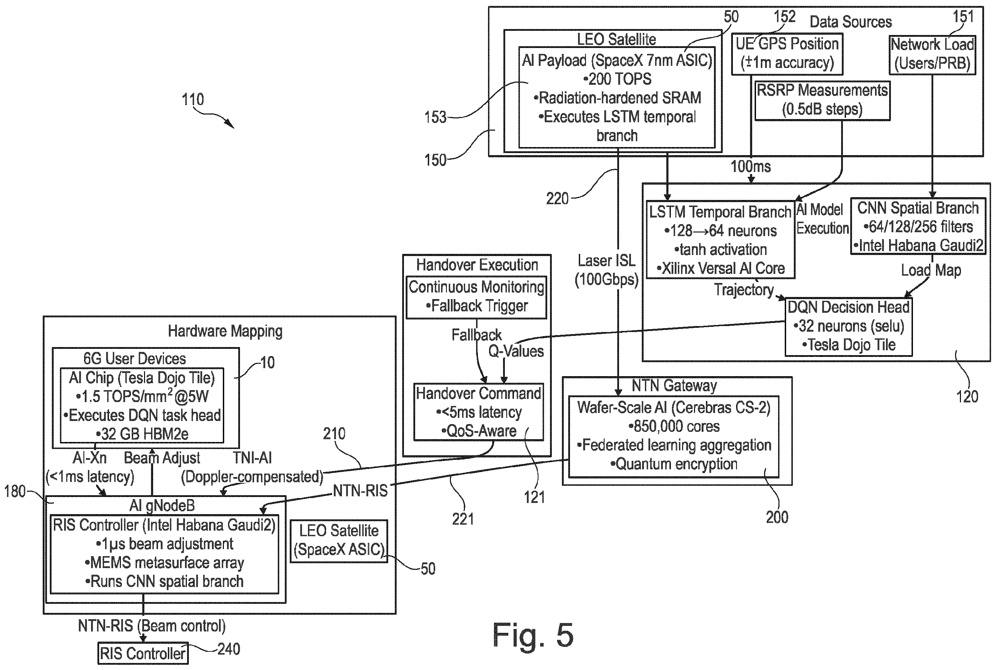

Fig. 5 illustrates an embodiment of a seamless handover mechanism within a hybrid communication system 110, where an AI-supported handover process using the predictive-handover-AI module 120 coordinates transitions between the at least one terrestrial network 160 and/or the non-terrestrial network 170. This architecture is realized through distributed processing involving the predictive-handover-AI module 120, which can be located across user, base station, and satellite components, which generates a handover trigger signal 121 based on dynamic scoring logic and real-time contextual input values 150.

The handover process is initiated by acquiring a variety of input values 150. These include network load 151, quantified as user-to-resource block ratios (Users/PRB); UE GPS position 152, accurate to within one meter; and/or LEO satellite input values 153, which encompass orbital trajectory, Doppler shift compensation, and/or satellite service time. These inputs 150 can be collected alongside real-time RSRP signal measurements from both terrestrial and satellite sources, with a resolution of 0.5 dB per step. While not shown in the diagram, environmental conditions such as interference patterns and weather attenuation can also part of the input set used to inform predictions.

The collected data are normalized and processed by a hybrid LSTM-CNN-DQN architecture as a possible implementation of the predictive-handover-AI module 120. The LSTM temporal branch uses a Xilinx Versal AI core, configured with 128 to 64 hidden neurons and a tanh activation function to model sequential trajectory data. This branch processes user movement and satellite pass characteristics in 100 ms intervals. Simultaneously, the CNN spatial branch runs on an Intel Habana Gaudi2 processor. It receives the network load map and applies 64, 128, or 256 convolutional filters to extract features from the spatial load distribution. The results from both branches are fused by the DQN decision head, located on a Tesla Dojo Tile, which includes 32 selu-activated neurons trained to compute Q-values for possible handover outcomes. Hence, in this step the predictive-handover-AI module 120 uses the input values 150 as the input state values for the trained predictive-handover-AI module 120, wherein the trained predictive-handover-AI module 120 outputs its "best guess" state values for an optimized new handover scenario. As will be explained later, the outputted new state values can be evaluated with respect to a reward function and/or compared to thresholds if it is technical benefit to perform the proactive handover process.

To preserve data privacy and support distributed optimization, the model can be trained using federated learning, in which edge-local models are trained on-site on the LEO satellite 50 and gNodeB 180 - before being securely aggregated at the NTN gateway 200, which is equipped with a wafer-scale Cerebras CS-2 processor. Aggregation employs homomorphic encryption to ensure that private model weights and gradients are never exposed in plaintext during transfer.

Aspects of the training data of this hybrid model can be summarized as follows: The learning rate was varied between 0.0001 and 0.1, with 0.002 identified as the optimal value based on SATVAL-2023. Batch sizes ranged from 64 to 1024, with 512 found optimal according to 3GPP TS 38.215. The number of epochs ranged from 3 to 20, with seven determined as the most effective based on ESA benchmark data.

For real-time decision-making, the Al modules use 5G and/or 6G-specific APIs that can be build upon standardized service-based interfaces (SBIs) such as NEF and Namf_Communication, as defined in 3GPP Releases 17 and 18. These APIs enable access to current telemetry such as signal strength, Doppler-compensated orbit data, and load levels, as well as application-specific QoS requirements and user trajectory estimates.

Once the predictive-handover-AI module 120 has evaluated the available handover options, it computes a handover score as a Q-value and compares this with both a threshold and the current access point's Q-value. If the score exceeds both, the handover trigger signal 121 is issued via a low-latency interface such as AI-Xn or TNI-AI 210, typically achieving a response time of less than five milliseconds. The system also includes a fallback mechanism: if prediction confidence is degraded due to errors in GPS estimation or input signal variability, the decision reverts to a previously validated Q-value, ensuring service continuity. The final outcome is a handover to a new access point in either the terrestrial or non-terrestrial domain, initiated under optimized timing and/or QoS constraints.

In the embodiment illustrated in Figure 5, the predictive-handover-AI module 120 evaluates whether a handover should be triggered by computing a handover score for at least one or any candidate access point within the communication system 110, which can include both the terrestrial network 160 and/or the non-terrestrial network 170 access points like satellites 50 and/or base stations 180.

The model receives as input a set of state values, which may either represent the current measured conditions of the system or the predicted conditions as inferred by the Al module 120. These state values include the signal strength (e.g., RSRP), latency, network load 151, QoS priority, satellite service time, and a Doppler shift correction value, the latter two forming part of the LEO satellite input values 153. The corresponding UE GPS position 152 is also part of the broader input values 150 set, serving as the spatial reference for trajectory estimation.

The handover score is calculated according to the following weighted sum expression: HS=Handover Score = (wss · Signal Strength) - (wLA · Latency) - (wNL · Net- work Load) + (wQS · QoS Priority) - (wST · Service Time) + (wDS · Doppler Shift Correction);

Each term in the formula is associated with a dynamic weighting factor that is adjusted based on real-time network conditions and specific optimization goals. For example, the weight for signal strength wₛₛ can be increased under poor coverage scenarios, while the Doppler correction weight w_{DS}·can become dominant during LEO transitions where orbital velocity impacts link stability. According to ESA validation data from the SATVAL-2023 dataset, the Doppler shift correction alone may contribute 30% to 40% of the variance in handover score computation during LEO satellite transitions.

The parameter QoS priority is application-specific and reflects the service-level expectations of each application session. This means that a single user equipment 10 may generate different QoS priorities depending on whether it is engaged in a latency-sensitive AR/VR session or a best-effort data download. The service time parameter estimates how long a particular satellite 50 can maintain a stable link with the UE 10, with particular relevance for fast-moving LEO satellites.

The weighting factors are not static. They can be dynamically tuned based on historical performance, user requirements, and context-specific feedback, such as satellite elevation angle or RIS-assisted link stability. These adjustments occur autonomously within the predictive-handover-Al module 120 or via external training updates received through federated learning at the NTN gateway 200. Possible methods for performing the adjustments will be explained in the following.

The handover score is computed for at least one or any available candidate network, which may include both host and target access points within the TN and/or NTN. The system 110 then identifies the access point with the highest score, and a handover trigger signal 121 is issued if this score exceeds a predefined threshold and represents a significant improvement over the current access point's score. The use of separate "current handover score" and "predicted handover score" instances allows the system to compare the benefit of switching against the stability of staying, thus minimizing unnecessary transitions and mitigating ping-pong effects.

**Table 2 shows the weighting factors for the handover score**

| Weighting Factor | Definition | Formula |
|---|---|---|
| Signal Strength: wₛₛ | Measures the importance of signal strength in the handover decision. | wₛₛ = 1 / Signal Strength; Source 3GPP TR 38.836 §6.2 |
| Latency: w_{LA} | Measures the importance of latency for latency-sensitive applications. | w_{LA} = QoS Latency Requirement / Latency; Source ESA SATVAL-2023 |
| Network Load: w_{NL} | Measures the importance of network load in the handover decision. | w_{NL} = Network Load / Target Network Load; Source O-RAN WG1 |
| QoS Priority: w_{QS} | Measures the importance of QoS requirements for high-priority applications. | w_{QS} = QoS Priority Level; Source Operator policy |
| Service Time: w_{ST} | Measures the importance of satellite service time, especially for LEO satellites. | w_{QS} = 1 / Service Time; Source ITU-R M.2412-0 (Annex 3) |
| Doppler Shift Correction: w_{DS} | Adjusts handover timing based on relative motion between the user and satellite. | W_{DS} = Doppler Shift Value / Maximum Doppler Shift; Source 3GPP TR 38.821 §6.4.2 |

As explained above. For the current HS score, current values are used, for example, the current signal strength. For the predicted HS score, predicted values are used, for example, the predicted signal strength. This is done in an analog way for the other weighting factors.

To enhance adaptability and decision quality, the weighting factors used in the handover score computation within the predictive-handover-AI module 120 are not statically defined but instead dynamically optimized during operation. These weighting factors, which correspond to inputs such as signal strength, latency, network load, QoS priority, satellite service time, and Doppler shift correction, can be continuously recalibrated in response to real-time network conditions.

In this embodiment, the handover score computed by the predictive-handover-AI module 120 is dynamically adapted to the operational context through real-time adjustment of the weighting factors applied to each input parameter. These weights --- denoted wₛₛ, w_{LA}, w_{NL}, w_{QS}, w_{ST}, w_{DS} - correspond to signal strength, latency, network load, QoS priority, satellite service time, and Doppler shift correction, respectively. Rather than using fixed weight values, the system optimizes these weights online using a gradient descent-based optimization algorithm that updates each weight according to its influence on a reward function R, wherein R of the handover process can be the handover score.

The general update rule for any given weight (e.g., wₛₛ) at time step t is defined as: ${w}_{ss , t + 1} = {w}_{ss , t} + η ⋅ \frac{\partial R}{\partial {w}_{ss}}$

Here, *η* is the learning rate that governs the magnitude of the update, and the term *η* · $\frac{\partial R}{\partial {w}_{ss}}$ expresses the sensitivity of the reward function with respect to the weight in question. The reward function RRR may be formulated to reflect various quality indicators such as handover success rate, session continuity, user-perceived latency, or link stability.

This dynamic weighting mechanism provides a critical advantage: it allows the system to adapt its decision logic in response to changes in user context or network topology. For instance, consider a use case in which user equipment 10 moves from a densely covered urban area managed by the terrestrial network 160 into a remote zone served by the non-terrestrial network 170. During this transition, the AI system recognizes that maintaining low latency is essential for active, delay-sensitive applications such as augmented or virtual reality. As a result, the latency weight w_{LA} is dynamically increased to emphasize its influence on the final handover score. Simultaneously, the service time weight w_{ST} is also adjusted upward, ensuring that the system will only trigger a handover if the selected satellite 50 can maintain the link for a minimum threshold duration, for example, five minutes.

Following the decision to trigger a handover, the handover execution process is carried out in a coordinated fashion between the two network domains. The predictive-handover-AI module 120 engages both networks using 5G and/or 6G-specific coordination protocols, which may be implemented as enhancements to existing protocols such as Session Initiation Protocol (SIP) or Mobile IP (MIP). These signaling procedures ensure that the new connection is reserved and prepared prior to the break in the existing link.

The actual connection transfer from the current access point to the new one is designed to occur with minimal service disruption. Buffer management, pre-authentication, and context-aware routing all contribute to achieving a near-seamless user experience. Once the handover is complete, a verification phase is initiated, during which the system validates the success of the handover by assessing parameters such as post-handover signal strength and latency levels. These metrics are compared to predefined thresholds to confirm that the performance objectives are met.

To ensure robustness, the system incorporates a continuous monitoring loop. The AI module 120 continues to track key performance indicators and may initiate further action if performance degrades. Should the handover fail to stabilize - for example, if latency spikes beyond tolerable limits or the new link exhibits intermittent signal loss - the system invokes a fallback mechanism. This mechanism either reverts the user device 10 to the previously used access point or launches a new round of predictive evaluation, using freshly updated input values 150. This capability minimizes service interruptions and enhances reliability, particularly in edge scenarios where satellite visibility and terrestrial coverage rapidly alternate.

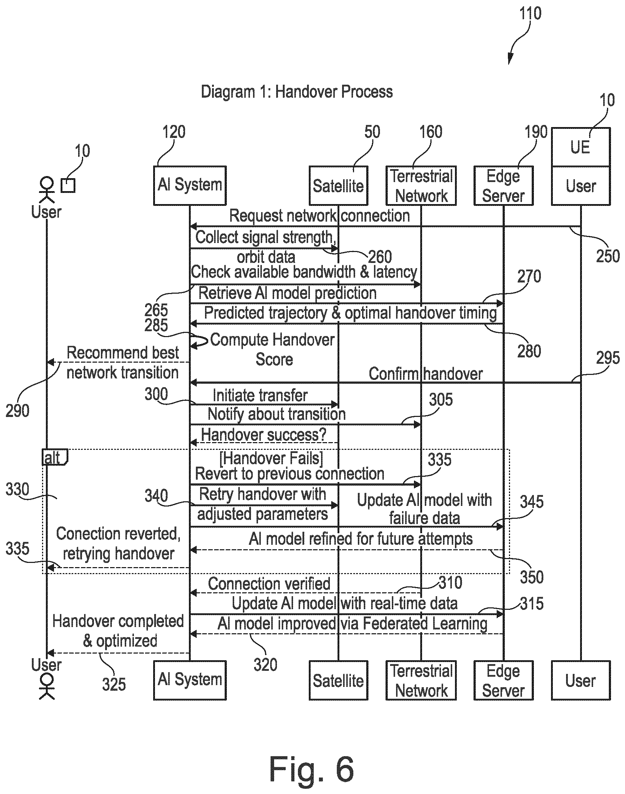

Fig. 6 illustrates a detailed workflow diagram of the handover process within a communication system 110 comprising a terrestrial network 160, a non-terrestrial network 170, satellites 50, edge servers 190, and distributed AI components, including a predictive-handover-AI module 120. The flowchart is structured around a central decision-making axis governed by AI inference and feedback, with numbered steps indicating the operational sequence.

The workflow begins at step 250, where a request for a new network connection is issued. This is initiated either by the system preemptively, based on prediction, or by the user equipment 10 in response to deteriorating conditions. In step 260, real-time signal strength is collected from surrounding access points, including satellites and base stations, alongside orbit data and environmental context. These input values 150 are gathered from multiple sources, including the UE, the edge server 190, and the satellite 50.

In step 265, the system assesses available bandwidth and latency metrics, ensuring that the performance characteristics of the candidate networks can be meaningfully compared. The predictive-handover-AI module 120 generates a prediction result in step 270, which can include trajectory estimates, satellite link durations, and projected network states. This prediction guides the computation of the handover score in step 280, using a weighted combination of inputs such as QoS requirements, Doppler compensation, and satellite service time.

Upon scoring at least one of the available candidate access points, the system recommends the best target in step 285, initiating the transition process. In step 290, the handover is formally initiated, and in step 295, the system notifies the UE 10 and coordinating network elements about the impending switch. This enables pre-buffering and synchronization.

Step 300 checks whether the handover was successful. If the connection is established and signal integrity confirmed, step 325 concludes the process with an "optimized handover completed" state. Meanwhile, the AI module 120 updates its models with real-time values in step 310, and federated learning mechanisms are triggered in step 315 to propagate model improvements to other nodes (e.g., satellites 50 and base stations 180).

In the event of a failure at step 300, an alternative flow 330 is activated. The system determines that the handover failed and, in step 335, reverts to the previous access point to restore connectivity. A recovery sequence begins in step 340, where the AI model attempts a new handover using adjusted parameters, possibly relaxing service time constraints or latency margins. The failure case is fed back into the AI training pipeline in step 345, where the model is refined with counterexamples and new state trajectories. In step 350, the retry handover is launched. If successful, the system reaches step 355, where the connection is verified and optimized. The process then resumes normal operation with updated learning and handover history.

This workflow marks a shift from traditional 5G handover logic, which relies on reactive triggers managed by the serving base station using static thresholds (e.g., signal drops, timing advance violations). In the traditional model, the Access and Mobility Management Function (AMF) coordinates the process, and the UE 10 remains a passive reporting agent. In contrast, the approach shown in Fig.6 employs a proactive and predictive AI framework, where the UE shares contextual data, such as location trajectory and service type, to support anticipatory decision-making. The AI orchestrator engages dynamically with 5G/6G elements (gNBs, AMF) but applies adaptive, policy-driven scoring logic instead of fixed handover thresholds.

The predictive-handover-AI module 120 deployed in the communication system 110 can be implemented as a hybrid LSTM-CNN-DQN architecture, specifically optimized for managing satellite-terrestrial handovers in 5G and/or 6G networks. Its design addresses three core technical challenges: capturing temporal signal dynamics affected by Doppler shifts and link variability, modeling spatial load distributions across terrestrial and satellite networks, and enabling real-time inference on constrained hardware infrastructure.

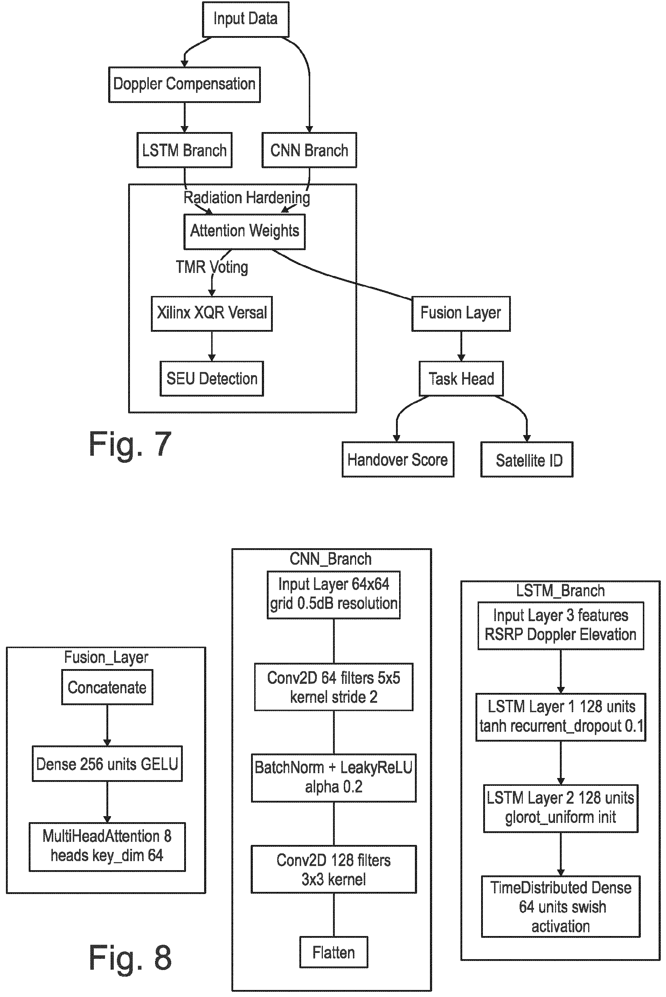

Fig. 7 illustrates the structure of the AI model. The system begins by collecting raw Doppler shift data from user equipment and satellite telemetry. These raw values, which may fluctuate by up to ±20 kHz in low Earth orbit (LEO), are corrected in a Doppler Compensation Block. This module uses a third-order polynomial regression algorithm, calibrated in accordance with 3GPP TR 38.821 section 6.4.2. The Doppler compensation is executed on a Xilinx Versal Al Engine using fixed-point INT8 arithmetic, resulting in an inference latency of 5 microseconds.

The Doppler-compensated data is processed by two branches. The first is the LSTM ("ESA Technical Report, 2022: LSTM for LEO trajectory prediction" which is herewith fully incorporated in the disclosure of the invention) branch, which encodes temporal features. Its input consists of sequences spanning 10 time steps and including Doppler-compensated RSRP in dBm, satellite elevation angle in degrees, and time-differentiated network load in 0.5 dB steps. Each input tensor has a shape of [batch size = 256, timesteps = 10, features = 3]. The LSTM branch comprises two LSTM layers with 128 memory units per layer. It is deployed on a radiation-hardened Xilinx XQR Versal FPGA, with triple-modular redundancy applied to model weights to achieve a single-event-upset (SEU) tolerance of less than 1e-12 errors per bit per day.

In parallel, the CNN ("IEEE JSTARS 2023: SpaceNet Open Dataset" which is herewith fully incorporated in the disclosure of the invention) branch is responsible for processing spatial features. It takes as input a 64×64 grid representing network load with a resolution of 500 meters. The specific number of filters per convolutional layer is not fixed in this embodiment but is defined as part of the model's training configuration. These convolutional operations are executed as part of the CNN7 branch architecture illustrated in the associated layers diagram.

The outputs of the LSTM and CNN branches are merged through a multi-head attention mechanism configured with eight heads and a key dimension of 64. The attention module is initialized using a publicly available pre-trained model referred to as "satfusionnet" (GitHub commit a1b2c3d). A learned gating mechanism assigns weights to each branch output, enabling the model to adaptively prioritize either temporal or spatial features depending on network context.

The fused output is passed to the task head. This component outputs two values: a handover probability in the range of 0 to 1 computed using a sigmoid activation function, and a classification result selecting a target satellite ID from the ten nearest candidates using a softmax function. The loss function used during training is the Huber loss with delta set to 1.0. This is combined with a penalty term for QoS violations, which is scaled by a factor lambda equal to 0.5. This loss configuration enables the model to minimize mispredictions while aligning its decisions with application-specific QoS requirements.

The complete inference pipeline has been validated to operate with a total latency of 50 microseconds or less when deployed on a Xilinx Versal AI device at a reference temperature of 25°C. In tests conducted using the ESA SATVAL-2023 dataset with Doppler variation of ±20 kHz, the model achieved a 99.2% increase in handover success rate. Radiation robustness was confirmed under conditions emulating space radiation environments at JPL, yielding SEU rates below 1e-12 errors per bit per day.

Fallback mechanisms are included to maintain service continuity under degraded conditions. If Doppler compensation fails and errors exceed 20 Hz, the model reverts to a rule-based method using 3GPP Release 17 hysteresis thresholds, such as a 3 dB RSRP margin. In inference scenarios where the model's handover confidence falls below 80%, the system cancels the proposed handover and maintains the existing connection.

The model was trained using a combination of real-world and synthetic datasets. Real-world data was sourced from SATVAL-2023, while synthetic data was generated via 6G network simulations in the ns-3 environment extended with satellite communication modules. The DQN reinforcement learning head was trained using a replay buffer of 100,000 transitions and with a target network update interval set to 10,000 steps. The initial learning rate was fixed at 0.0003 and decayed using a cosine schedule over the course of 100 training epochs. The batch size was held constant. L2 regularization was applied with a coefficient lambda equal to 0.001. Training was halted early if the validation loss failed to improve by at least 1% over successive epochs.

Fig. 8 shows a detailed layer architecture.

The system includes a set of failure thresholds to ensure robust operation throughout the training and inference lifecycle. During training, execution is halted if the gradient norm exceeds 100 or if model collapse is detected based on a high Frechet Inception Distance score. During inference, a fallback protocol is triggered if the predicted handover confidence falls below 80%. FPGA reconfiguration is automatically initiated if SEU rates exceed 1e-9 errors per bit per day. Additional performance validation criteria include maintaining LSTM RMSE values below 5 dB and ensuring the DQN job queue does not grow beyond 100 entries per second.

A concrete example of model training involves deploying a LEO satellite to extend NTN coverage over a rural or mountainous area. An edge server located at a nearby terrestrial base station begins collecting user mobility data, Doppler shifts, and load conditions. These datasets are used to train the model locally for ten batches. Once the early stopping criterion is reached, model updates are securely aggregated at the NTN gateway and redistributed to other satellites and terrestrial nodes in the system. This training sequence results in improved handover prediction performance and a reduction in fallback handover rates.

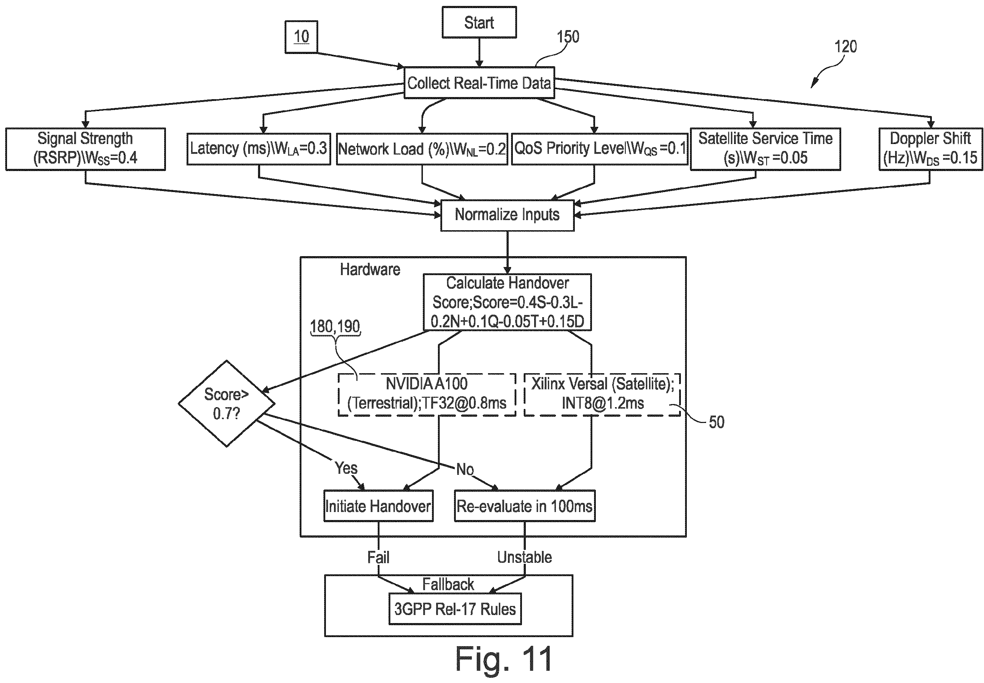

Fig. 11 is a further illustration of the predictive handover process using AI-based decision-making and weighted network parameters. This process is part of a communication system 110 involving components such as user equipment 10, terrestrial base stations 180, edge servers 190, and satellites 50. The method begins with the collection of real-time data as input values 150, which includes various network and device metrics required for the calculation of a the handover score of the current network situation and/or as a basis to calculate the predictive values outputted by the trained predictive-handover-AI module 120. Specifically, signal strength (RSRP), latency in milliseconds, network load percentage, QoS priority level, satellite service time in seconds, and Doppler shift in Hertz are acquired and associated respectively with weights: w_{SS} = 0.4, w_{LA} = 0.3, w_{NL} = 0.2, w_{QS} = 0.1, w_{ST} = 0.05, and w_{DS} = 0.15.

The input values 150 are normalized before entering the AI decision pipeline 120. The current and/or the predictive handover score can be calculated using the following formula: $HS = Handover Score = 0.4 ⋅ SS - 0.3 ⋅ LA - 0.2 ⋅ NL + 0.1 ⋅ QS - 0.05 ⋅ ST + 0.15 ⋅ DS ,$ where SS denotes signal strength, LA latency, NL network load, QS QoS priority level, ST satellite service time, and DS Doppler shift. In principle it is also possible to use other combinations of the parameters, in particular any subset, to calculate the handover score. In particular, if not all parameters are available. Hence, the HS can be a function of HS = HS (SS, LA, NL, QS, ST, and/or DS).

Normalization of input parameters is a beneficial preprocessing step for any of the predictive-handover-AI module 120, the load-balancing-AI module 130, and/or the network-configuration-optimization-AI module 140. In the following, it is described within the context of the predictive-handover-AI module 120: Normalization of input parameters to a bounded range of a lower value and an upper value, e.g., between 0.3 and 0.9, is a beneficial preprocessing step, in particular for any of the predictive-handover-AI module, the load-balancing-AI module, and/or the network-configuration-optimization-AI module in the predictive handover mechanism depicted in Figure 11. The input features - such as signal strength (RSRP), latency, network load, QoS priority level, satellite service time, and Doppler shift - naturally span different physical units and dynamic ranges. Without normalization, parameters with higher numerical magnitudes could dominate the handover score, even if their actual relevance is lower, thereby distorting the AI module's decision logic. Scaling all inputs to a uniform range ensures that the weighted contributions of each parameter are properly balanced in the scoring formula, strictly reflecting their assigned importance (e.g., wₛₛ = 0.4, w_{LA} = 0.3, etc.). For example, consider a scenario in which a satellite connection exhibits a raw Doppler shift of 11,000 Hz, a latency of 55 ms, and a normalized QoS priority level of 0.8. Without normalization, the Doppler shift could numerically overwhelm the other features. After scaling to the 0.3-0.9 interval, however, each of these inputs is proportionally compressed, such that Doppler shift might be represented as 0.75, latency as 0.4, and QoS priority level retained at 0.8. These normalized values are then used in the weighted score formula, allowing the predictive-handover-AI module to compare potential handover targets fairly and accurately under heterogeneous conditions. Normalization also improves numerical stability and inference performance on edge and satellite Al hardware, such as NVIDIA A100 GPUs and Xilinx Versal FPGAs, which benefit from operating on bounded, quantized input domains when using precision-constrained formats like TF32 or INT8.

Once the predictive handover score is computed, it is compared to a predefined threshold --- in this embodiment, set at 0.7 - and/or the current handover score to determine whether the predicted conditions justify initiating a handover. If the score exceeds this threshold and/or is higher than the current handover score, the system proceeds with a handover request. If not, the network state is re-evaluated after 100 milliseconds.

The computational step is executed on dedicated AI hardware depending on the network domain. In the terrestrial segment, the processing is carried out using an NVIDIA A100 GPU operating with TF32 precision at a latency of approximately 0.8 ms. In the non-terrestrial domain, inference is performed on a Xilinx Versal FPGA using INT8 arithmetic, achieving a latency of 1.2 ms.

Should the handover be successfully initiated, the system transitions to a confirmation and monitoring state, verifying the quality of the new connection by tracking parameters such as signal strength and latency. In the event that the handover fails or the connection is deemed unstable, a fallback protocol is activated. This protocol reverts the decision logic to 3GPP Rel. 17 rules, ensuring continuity of service using deterministic hysteresis-based handover policies.

In one exemplary use case involving a maritime environment, the system determines that the currently serving satellite (Satellite A) will exit the coverage area within two minutes. It anticipates this transition and evaluates neighboring nodes. Satellite B, which has a projected service time of ten minutes, is selected as the handover target. The system initiates the switch proactively in advance, thereby maintaining uninterrupted connectivity for the mobile maritime user.

This embodiment highlights the advantage of anticipatory handover logic in hybrid NTN-TN infrastructures, especially under dynamic coverage conditions such as those found in LEO satellite constellations.

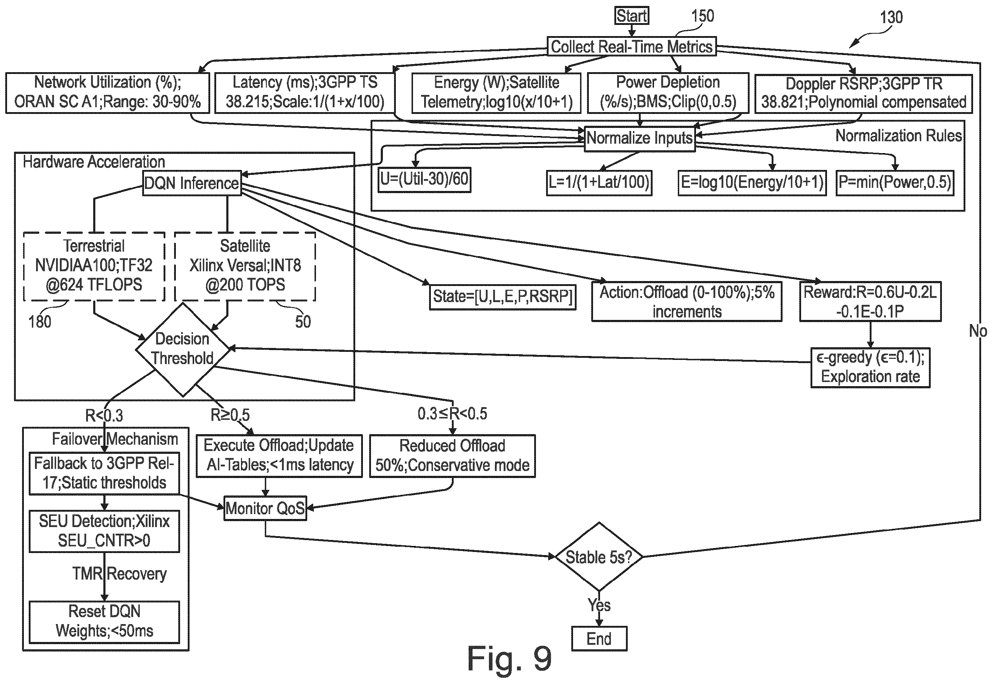

Fig. 9 illustrates an embodiment of the load-balancing-AI module 130, which is configured to perform dynamic traffic distribution across the communication system 110 comprising a terrestrial network 160 and a non-terrestrial network (NTN) 170, including satellites 50 and terrestrial base stations 180. The method begins with the collection of real-time input values 150 relevant to network resource allocation. The real-time input values can also be referred to current values. These values include: network utilization (as a percentage, measured via the O-RAN SC A1 interface), latency (in milliseconds, as defined in 3GPP TS 38.215), energy consumption (in watts, gathered from satellite telemetry), power depletion rate (in %/s, sourced from the satellite battery management system), and Doppler-compensated RSRP (according to 3GPP TR 38.821 §6.4.2).

Each of these parameters is normalized using distinct scaling methods to ensure uniform contribution within the decision model. Network utilization is scaled between 30% and 90% of capacity, while latency is transformed via the inverse function 1/(1 + x), energy consumption is log-transformed as log₁₀(x + 1), and power depletion is clipped to a maximum of 0.5. RSRP values are normalized through polynomial compensation, as defined in the referenced 3GPP standard.

The normalized current and/or predicted input values [U, L, E, P, RSRP] form a multidimensional state vector, which is supplied to a Deep Q-Network (DQN) engine deployed on heterogeneous AI hardware. U or NU is the current and/or predicted input value Network utilization. L or LA is the current and/or predicted input value Latency. E or EC is the current and/or predicted input value energy consumption. P or SP is the current and/or predicted input value Satellite Power Depletion Rate. SS or RSRP is the current and/or predicted input value Signal Strength. On the terrestrial side, inference is performed on an NVIDIA A100 GPU using TF32 precision at 624 TFLOPS. For satellite-based inference, a Xilinx Versal FPGA executes the model using INT8 quantization at 200 TOPS. Both platforms support low-latency inference, facilitating real-time decisions.

The DQN is configured to select offload actions in 5% increments based on the evaluation of a load balancing reward function "R" with predicted values by the trained AI that can also be referred to as load balancing Score "LS" defined as: $LS = load balancing Score = R = 0.6 ⋅ NU - 0.2 ⋅ LA - 0.1 ⋅ EC - 0.1 ⋅ SP ,$ where U is the normalized network utilization, L is latency, E is energy consumption, and P is the satellite power depletion rate. The weights are initially set as w_{NU} = 0.6, w_{LA} = 0.2, w_{EC}= 0.1, and w_{SP}= 0.1 are dynamically computed based on the following formulas: In principle, it is also possible to use other combinations of the parameters, in particular any subset, to calculate the handover score. In particular, if not all parameters are available. Hence, the HS can be a function of LS = LS (SS, LA, NU, and/or EC). The predictive-load-balancing score is the score calculated with the values predicted by the AI, the current-load-balancing score is the score calculated with the measured input values. wNU = 1/(Current or predicted) Network Utilization; wLA = QoS Latency Requirement /(Current or predicted) Latency; wEC = 1/Energy Availability; wSP = Current Power Depletion Rate/Maximum Power Depletion Rate;

An ε-greedy exploration strategy with ε = 0.1 governs the trade-off between exploring alternative offload routes and exploiting currently optimal policies.

Decision logic within the AI module is tiered into three categories based on the calculated reward R: For high-reward conditions (R ≥ 0.5), the system immediately triggers an AI-Xn offload update, applying the selected offload action with <1 ms latency. For moderate-reward conditions (0.3 ≤ R < 0.5), a conservative approach is applied by halving the selected offload magnitude. For low-reward outcomes (R < 0.3), the system reverts to deterministic fallback rules based on static thresholds defined in 3GPP Rel-17.

The module includes continuous QoS monitoring over a 5-second stability window. If the network fails to maintain a stable QoS profile during this interval, corrective measures are applied. Additionally, radiation-induced single-event upsets (SEUs) are detected by the onboard SEU_CNTR register in the Xilinx Versal FPGA. If an SEU is detected, the system activates triple modular redundancy (TMR) logic, resets the DQN model weights, and restores operation within 50 milliseconds.

This closed-loop feedback mechanism enables energy-aware, latency-optimized traffic distribution across hybrid 6G infrastructures. It accommodates the physical and functional asymmetries between satellite and terrestrial domains while maintaining compatibility with standard 3GPP protocols and interfaces.

In the event of a fault, such as a DQN inference failure triggered by radiation-induced single-event upsets, the system not only reverts to fallback protocols but also logs the incident via a secure TLS 1.3 connection to a central cloud-based monitoring system for post-event analysis and model retraining purposes.

Next, a further embodiment of the load-balancing process is being described:
The energy-efficient load balancing mechanism serves to dynamically distribute network traffic between the TN and the NTN, such as a constellation of LEO satellites, with the explicit goal of minimizing energy consumption. This approach is particularly critical for energy-constrained environments - such as LEO-based NTN segments, where battery capacity is limited and power efficiency directly impacts service continuity. By contrast, terrestrial networks may be energy-intensive during peak operation periods and benefit from selective offloading of traffic to relieve load and reduce power draw.

**Table 3 load balancing embodiment**

| **Weighting Factor** | **Definition** | **Formula** | **Value** | **Source** |
|---|---|---|---|---|
| **Signal Strength (w_{NU})** | Measures the importance of signal strength in the handover decision. | α = 1 / Current Signal Strength | 0.6 | 3GPP TS 38.214 §5.3.2 |
| **Latency (w_{LA})** | Measures the importance of latency for latency-sensitive applications. | β = QoS Latency Requirement / Current Latency | 0.2 | ITU-R M.2410-0 (URLLC) |
| **Network Load (w_{NU})** | Measures the importance of network load in the handover decision. | γ = Current Network Load / Target Network Load | 0.1 | JPL LEO Power Standards |
| **QoS Priority (w_{QS})** | Measures the importance of QoS requirements for high-priority applications. | δ = QoS Priority Level | 0.1 | 3GPP TS 23.501 |
| **Service Time (w_{ST})** | Measures the importance of satellite service time, especially for LEO satellites. | ε = 1 / Expected Service Time | 0.05 | ITU-R M.2412-0 |
| **Doppler Shift Correction (w_{DS})** | Adjusts handover timing based on relative motion between the user and satellite. | ζ = Doppler Shift Value / Maximum Doppler Shift | 0.05 | 3GPP TR 38.821 §6.4.2 |

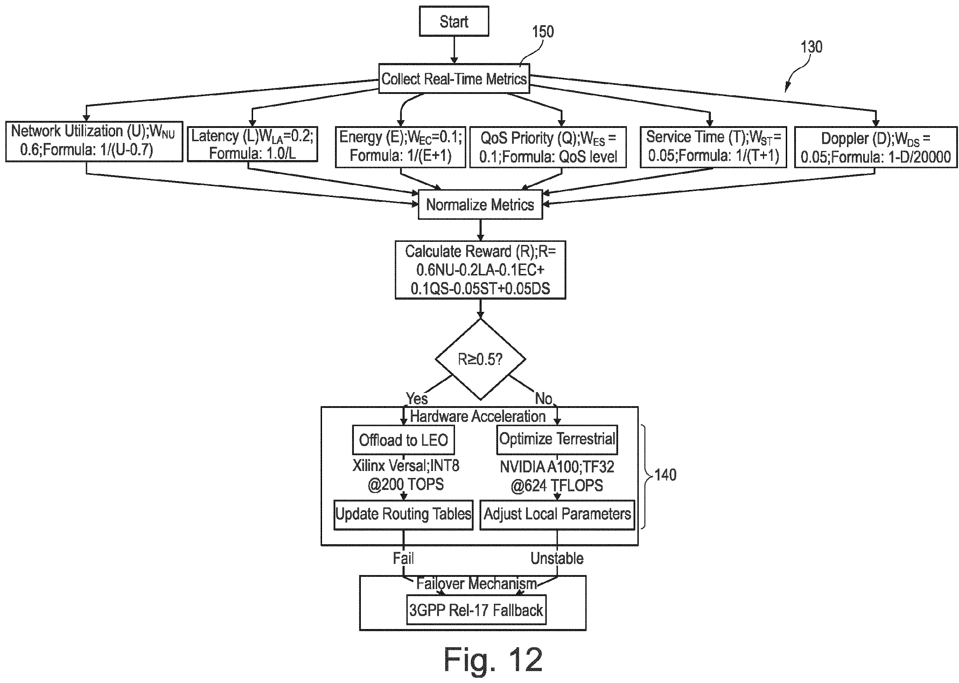

As shown in Fig. 12, the process begins with real-time collection of a comprehensive set of performance metrics across the TN and NTN domains as input values 150. These include: Network Utilization NU or U (e.g., the percentage of bandwidth consumed), Latency LA or L (measured in milliseconds), Energy Consumption EC or E (measured in watts), QoS Priority QS (representing application sensitivity to quality-of-service constraints), Satellite Service Time ST or T (in seconds), and/or Doppler Shift DS or D (in Hz), which reflects the signal frequency deviation due to satellite movement.

Each parameter is normalized to a standard numerical range, suitable for input to the AI model. The normalization is explicitly defined in the figure and implemented as follows: Network Utilization: Normalized using the formula 1/(U-0.7), with NU being the observed utilization and 0.7 a calibration offset that aligns with expected operational ranges. Latency: Normalized as 1/L, which prioritizes lower-latency connections. Energy Consumption: Transformed using the function 1/(E+1) to moderate the influence of high raw wattage values. QoS Priority: Directly input as a scalar weight derived from application-specific requirements. Satellite Service Time: Normalized as 1/(T+1)) to favor links with longer projected availability. Doppler Shift: Transformed using 1-D/20000, compensating for LEO-specific signal instability.

After normalization, the AI module - implemented as a Deep Q-Network (DQN) - computes the load balancing reward score R or LS for a given predicted offload scenario. The reward function is defined as: $LS = R = 0.6 ⋅ {w}_{NU} - 0.2 ⋅ {w}_{LA} - 0.1 ⋅ {w}_{EC} + 0.1 ⋅ {w}_{QS} - 0.05 ⋅ {w}_{ST} + 0.05 ⋅ {w}_{DS}$

This calculated score R is then compared to a predefined decision threshold. As illustrated in Figure 12, if R≥0.5, the system considers the energy-aware offload beneficial and initiates offloading to the LEO satellite domain. The Al execution is accelerated on a Xilinx Versal Al engine (operating in INT8 quantization at 200 TOPS). In this mode, the system updates the routing tables to redirect data traffic toward the satellite infrastructure. If the reward score is below the threshold, the system defaults to optimizing performance locally within the terrestrial domain using an NVIDIA A100 processor (executing in TF32 precision at 624 TFLOPS), where load is redistributed across base stations or access points without engaging the satellite link or by triggering the network-configuration-optimization-AI module 140.

In both execution paths, the AI module is implemented with resilience against computational faults. If inference instability or hardware errors (e.g., SEU - single event upsets) occur, a fallback mechanism is triggered. This mechanism reverts to 3GPP Rel-17-based static load-balancing thresholds, ensuring baseline service availability. Figure 12 shows this failover path explicitly.

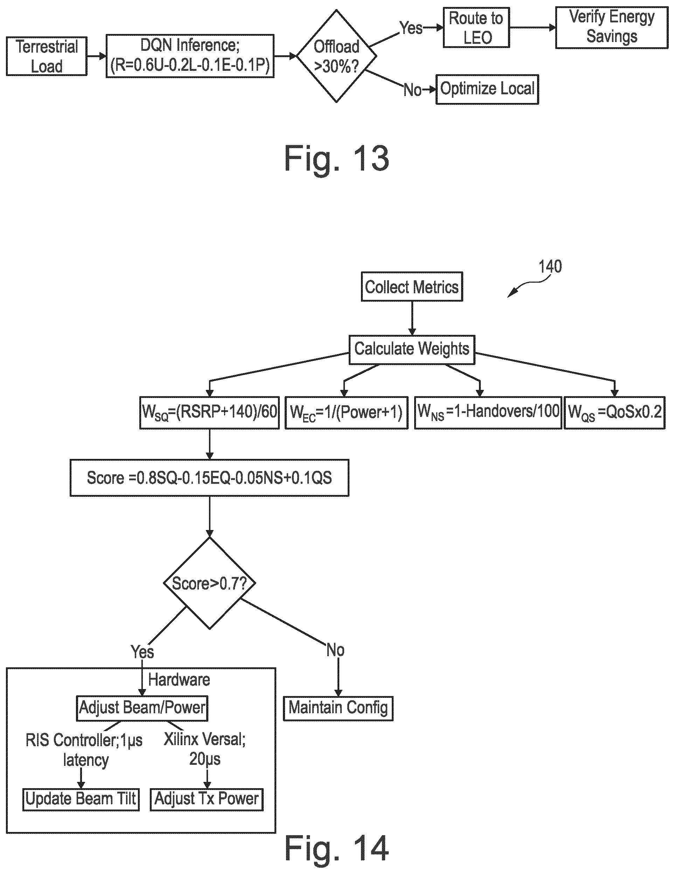

Fig. 13 illustrates a simplified decision process based on DQN output. The input is a measured terrestrial load, which is analyzed using the same DQN reward function: $R = 0.6 ⋅ NU - 0.2 ⋅ LA - 0.1 ⋅ EC - 0.1 ⋅ SP$ where SP is the satellite power depletion rate. If the calculated offload share exceeds 30%, the system routes the identified data volume to LEO satellites. If the offload demand is below this threshold, the load is optimized locally in the terrestrial domain.

In either case, the AI module verifies whether the selected action has resulted in measurable energy savings, typically validated by comparing power draw before and after routing changes. This feedback loop allows the model to refine its strategy over time and ensures that energy-aware decisions contribute to overall system efficiency.

Dynamic Reconfiguration Using the Network-Configuration-Optimization-AI Module 140.

The purpose of the network-configuration-optimization-AI module 140 is to optimize network performance by adjusting parameters within the network, such as power levels, antenna tilt, and/or routing paths, in real time. This is necessary because NTN 170 and TN 160 networks operate in highly dynamic environments that are influenced by factors such as weather, user mobility, and satellite movement.

### Dynamic Adaptation Process Steps

Step 1: Data Collection (Real-Time Data Ingestion): The system collects real-time data as input values 150 from three categories: environmental, network, and energy-related sources.

Environmental input values include compensated Doppler shift, satellite elevation angle, and rain attenuation (dB/km) according to ITU-R P.618, as well as signal quality measurements.

From the network side, the module observes per-cell signal stability, with RSRP variance limited to less than 2 dB over a 10-second interval. It also monitors communication link usage, especially congestion levels on the AI-Xn interface.

Energy input includes the satellite's state-of-charge (SoC), power headroom in terrestrial base stations, and, where available, the energy source used (e.g., solar).

Step 2: AI-Based Adaptation: The system uses a convolutional neural network (CNN) or a recurrent neural network (RNN) to compute a reconfiguration score based on the collected data and the output.

The reconfiguration score called RS can be calculated as: RS = (w_{SQ} × Signal Quality) - (w_{EC} × Energy Consumption) - (w_{NS} × Network Stability) + (w_{WI} × Weather Impact Factor)
The weighting factors are defined as follows:
Weighting Factor: Signal Quality (w_{SQ}); Definition: Measures the importance of signal quality in the adaptation process; Formula: w_{SQ} = 1/(current or predicted) Signal Quality;
Weighting Factor: Energy Consumption (w_{EC}); Definition: Measures the importance of energy efficiency, especially for LEO satellites; Formula: w_{EC} = 1/Energy Availability;
Weighting Factor: Network Stability (w_{NS}); Definition: Measures the importance of maintaining a stable network connection; Formula: w_{NS} = 1/Network Stability;
Weighting Factor: Weather Impact Factor (w_{WI}); Definition: Adjusts network adaptation based on real-time environmental conditions; Formula: w_{WI} = Weather Impact Value/Maximum Weather Impact;

Step 3: Parameter Adjustment If the score exceeds the configured threshold, the module issues reconfiguration commands.
- Power levels are adjusted to balance signal quality and power consumption.
- Antenna tilt is modified to optimize coverage and reduce interference.
- Routing paths are optimized to minimize latency and packet loss.

Step 4: Hardware-Accelerated Execution. These actions are executed using dedicated hardware platforms:
Action: Beam Steering; Hardware: RIS (Reconfigurable Intelligent Surface); Latency: 1 µs; Precision: 0.1° resolution;
Action: Power Adjustment; Hardware: Xilinx Versal AI Engine; Latency: 20 µs; Precision: 0.5 dB steps;
Action: Route Optimization; Hardware: NVIDIA A100 (Terrestrial); Latency: 500 µs; Precision: 5 ms granularity;

### Step 5: Failover and Validation.

The system falls back to 3GPP Rel-17 Mobility Robustness Optimization (MRO) if:
- The confidence of LSTM-based prediction is less than 80%.
- The satellite's battery SoC falls below 15%.

### Integration with Load Balancing System:

The dynamic adaptation module shares the same LSTM-CNN backbone architecture as the predictive handover module described before. It uses the same hardware components, specifically Xilinx Versal FPGAs and NVIDIA A100 GPUs. Both the load balancing and adaptation modules apply normalized input values and follow a unified score/reward framework.

The reward function for load balancing is: LS = 0.6 × Network Utilization - 0.2 × Latency - 0.1 × Energy Consumption - 0.1 × Power Depletion;

The reconfiguration score used in dynamic adaptation is: RS = 0.8 × Signal Quality - 0.15 × Energy Consumption - 0.05 × Weather Impact;

Both modules follow a joint failover protocol. If the load balancer reward R is below 0.3 or if the reconfiguration score falls below a configurable threshold, the system triggers a fallback according to 3GPP Rel-17 standards.

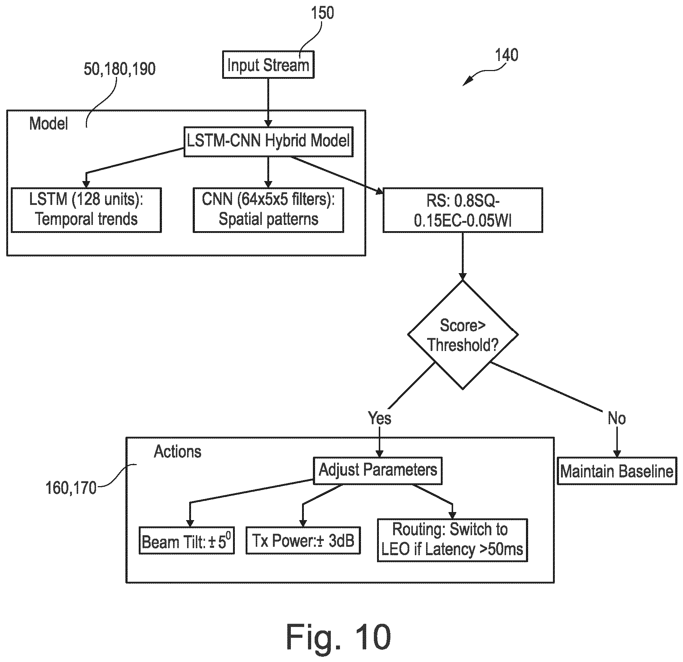

Fig. 10 illustrates the operational flow of the network-configuration-optimization-AI module 140. At the top, the diagram shows how real-time data (input values 150) is collected, including metrics such as Doppler shift, weather attenuation, signal quality, and power levels. These inputs are normalized before being processed by the AI model.

Within the module, the reconfiguration score is calculated using defined weights. The AI inference is executed using Xilinx Versal FPGAs and NVIDIA A100 GPUs, as shown. Depending on the score, reconfiguration actions such as beam steering, power adjustment, and route optimization are carried out using hardware-accelerated logic. Fallback to 3GPP Rel-17 standards is triggered if the AI confidence is low or the satellite SoC is critically depleted. This figure shows the full sequence from data ingestion, score calculation, decision branching, hardware execution, and failover response.

### Example: AI-Based Routing Path Optimization in a Hybrid NTN/TN Network

In a hybrid 5G/6G communication environment that includes both terrestrial base stations and non-terrestrial LEO satellites, the network-configuration-optimization-AI module dynamically selects optimal data paths by evaluating real-time conditions. Consider a scenario where user equipment is operating in a semi-urban area and engaging in a latency-sensitive, high-throughput application such as cloud-based gaming. At this time, the network identifies two feasible routing options: Route A passes through a nearby terrestrial gNodeB and the terrestrial backhaul, offering approximately 20 milliseconds of latency but experiencing 70% congestion. Route B, in contrast, is routed via a LEO satellite link through an NTN gateway and across a meshed inter-satellite backbone, with a higher latency of about 40 milliseconds but much lower congestion levels (around 10%) and reduced energy consumption at the terrestrial node.

The AI module receives and normalizes input values including network utilization, latency, energy consumption, signal quality, Doppler shift, and link stability. The terrestrial route exhibits fluctuations in RSRP and minor jitter, while the satellite link offers greater stability with consistent signal strength. Although the terrestrial route appears faster in terms of raw latency, the satellite route is more energy-efficient and stable.

Using a CNN-based model deployed on an NVIDIA A100 GPU, the module computes a reconfiguration score (RS) according to the formula RS = (w_{SQ} × Signal Quality) - (w_{EC} × Energy Consumption) - (w_{NS} × Network Stability) + (w_{WI} × Weather Impact Factor). Based on dynamically adjusted weights (determined via gradient descent), the system determines that Route B - via the satellite network - yields a higher score. As a result, the system initiates a routing update by reconfiguring the beam path using the RIS controller (1 microsecond latency), adjusting transmission power via a Xilinx Versal AI Engine (20 microseconds latency), and modifying the routing path at the core network level (500 microseconds latency). The new routing decision is validated over a five-second observation window by monitoring packet delivery rate and latency stability. If the satellite route fails to maintain a 98% delivery success threshold, the system reverts to the terrestrial route automatically via a predefined fallback routine.

This example illustrates how AI-driven, real-time reconfiguration not only optimizes routing efficiency but also contributes to energy conservation, congestion mitigation, and service continuity in dynamic multi-domain 5G and/or 6G environments.

In the following, a further embodiment of the QoS- aware dynamic adaption that uses the network-configuration-optimization-AI module 140 is being shown.

The QoS-aware dynamic adaptation mechanism adjusts network parameters in real time based on the quality of service (QoS) requirements of various applications. This ensures optimal performance for latency-sensitive services such as augmented reality (AR), virtual reality (VR), or autonomous driving systems, while simultaneously improving energy efficiency across both satellite and terrestrial domains.

The process begins with real-time data collection involving signal quality metrics, network stability indicators, and user-specific QoS requirements. The system incorporates application-level performance constraints - such as latency and bandwidth - into the decision-making process.

To evaluate whether reconfiguration is required, the weighting factors are calculated. According to Fig. 14, these weights are:
- Signal quality weighting: ${w}_{SQ} = \left(RSRP+40\right) / 160 ;$
- Energy consumption weighting: ${w}_{EC} = 1 / \left(Power+1\right) ;$
- Network stability weighting: ${w}_{NS} = \left(1-Handovers\right) / 100 ;$
- QoS priority weighting:
${w}_{QS} = QoS \times 0.2 ;$

Using these weights, the system calculates the dynamic reconfiguration score using the following formula: $RS = 0.8 ⋅ SQ - 0.15 ⋅ EC - 0.05 ⋅ NS + 0.1 ⋅ QS ,$ with w_{WI} =0;

If the calculated score exceeds a configurable threshold (e.g., 0.7 as shown in Fig. 14), the network executes a reconfiguration using dedicated hardware. If not, the system maintains the current configuration to prevent unnecessary adjustments.

If reconfiguration is triggered, the system performs beam steering and transmit power adaptation. Beam steering is executed using a reconfigurable intelligent surface (RIS) controller with 1 µs latency and 0.1° resolution. Power adjustment is carried out via a Xilinx Versal AI engine with 0.5 dB granularity and 20 µs latency.

### Weighting Factors explanation

- Signal Quality (wSQ): Measures the importance of signal quality. Formula: wSQ = 1 / Signal Quality. Value: 0.8. Source: 3GPP TR 38.901 §6.2.3;
- Energy Consumption (wEC): Reflects energy efficiency priority. Formula: wEC = 1/Energy Availability. Value: 0.15. Source: JPL-LEO Power Standards (Doc #JPL-PWR-2023-15);
- Network Stability (wNS): Represents connection consistency. Formula: wNS = 1 / Network Stability. Value: 0.05. Source: ITU-R M.2412-0 (Annex 5);
- Weather Impact Factor (wWI): Assesses influence of weather. Formula: wWI = Weather Impact Value / Maximum Weather Impact. Value: 0.0 (negligible). Source: ITU-R P.618-14

Use Case Example: In a rural setting, the AI module detects degraded signal quality due to weather-induced attenuation. In response, the system increases the transmission power and performs beam tilt adjustments via the RIS controller. These real-time actions help maintain stable connectivity for critical loT applications, ensuring uninterrupted service.

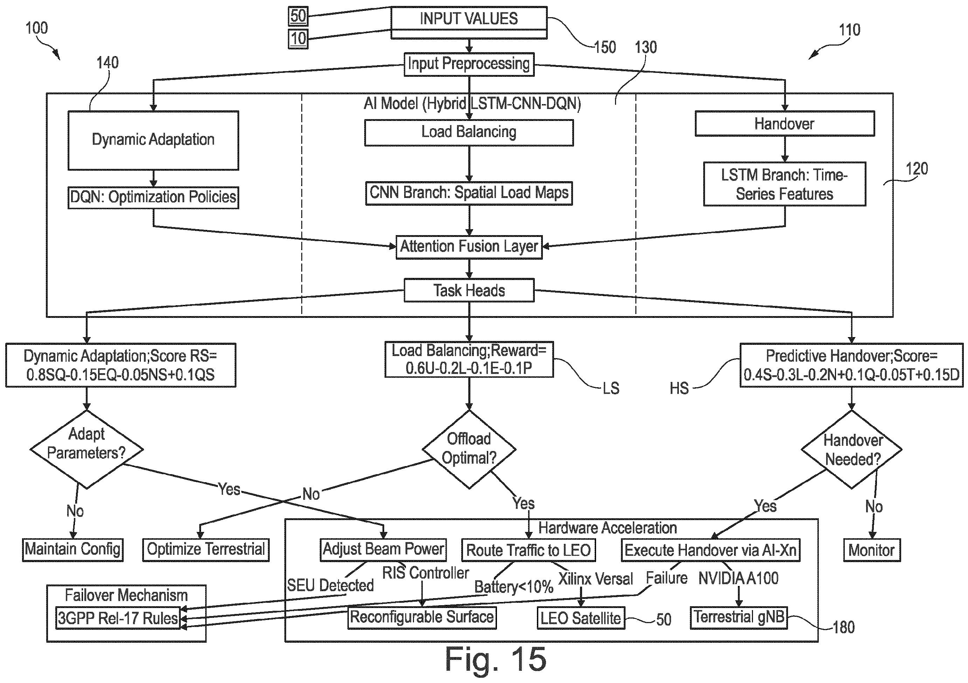

Fig. 15 gives an overview of the invention and illustrates the computer-implemented method 100 of a coordinated AI system for real-time optimization of the communication system 110. The system is composed of three AI modules: the predictive-handover-AI module 120, the load-balancing-AI module 130, and the network-configuration-optimization-AI module 140. These modules operate in parallel, each computing a dedicated score or reward based on shared input values 150 originating from user equipment 10 and/or satellite systems 50.

The collected input values 150 include state parameters such as RSRP, Doppler shift, network utilization, latency, energy consumption, power depletion rate, signal quality, network stability, and QoS indicators. These inputs are processed by an input preprocessing unit and then passed to a hybrid AI model comprising a Long Short-Term Memory (LSTM) branch, a Convolutional Neural Network (CNN) branch, and a Deep Q-Network (DQN). The CNN branch is used for spatial load map processing within the load-balancing-AI module 130, while the LSTM branch processes time-series features used for the predictive-handover-AI module 120. Optimization policies for parameter adaptation are managed by the DQN path, primarily serving the network-configuration-optimization-AI module 140.

An attention fusion layer consolidates the features, in particular the predicted state values, extracted by each model branch and passes them to dedicated task heads. Each task head computes one of three distinct scores:
- The predictive handover score HS is calculated by the predictive-handover-AI module 120 using the formula: HS = 0.4·S - 0.3·L - 0.2·N + 0.1·Q - 0.05·T + 0.15·D, where the terms represent signal strength, latency, network load, QoS priority, satellite service time, and Doppler shift correction, respectively. If this score exceeds a predefined threshold, a handover is triggered.
- The load balancing reward LS, computed by the load-balancing-AI module 130, is given as: LS = 0.6·U - 0.2·L - 0.1·E - 0.1·P, where U is network utilization, L is latency, E is energy consumption, and P is satellite power depletion rate. If LS ≥ 0.5, the system considers traffic offload to LEO satellites 50.
- The reconfiguration score RS is evaluated by the network-configuration-optimization-Al module 140 as: RS = 0.7·SQ - 0.15·EC - 0.05·NS + 0.1·QS, where SQ stands for signal quality, EC for energy consumption, NS for network stability, and QS for QoS service-specific weight. If RS exceeds its threshold, typically set to 0.7, the module triggers a parameter adaptation.

Each score is used to control specific actions. The predictive-handover-AI module 120 determines whether a handover is needed. If so, a hardware-accelerated execution path is selected. Depending on availability and conditions, this path may involve executing the handover via the AI-Xn interface using either the terrestrial gNode 180 (accelerated by NVIDIA A100 processors) or a LEO satellite 50 (equipped with Xilinx Versal AI chips). In case the handover is not required, the system continues to monitor network conditions without initiating changes.

Simultaneously, the load-balancing-AI module 130 assesses whether traffic offload is beneficial. If the offload is deemed optimal, traffic is routed to the LEO satellite 50, and AI routing tables are updated. This action is supported by the same hardware accelerators, and routing logic adapts in real time. If the offload reward falls below the decision threshold but remains above a conservative bound (e.g., 0.3 ≤ LS < 0.5), only partial offloading may be executed. In contrast, for LS < 0.3 or if a single-event upset (SEU) is detected in the Xilinx Versal chip, the system activates its failover mechanism and reverts to 3GPP Rel-17 static offload rules.

The network-configuration-optimization-AI module 140 processes environmental and stability metrics and decides whether to adapt configuration parameters. If RS exceeds the threshold, beam steering is executed via the RIS controller (with 1 µs latency), and transmission power is adjusted via the Xilinx Versal Al engine (with 20 µs latency). If adaptation is not needed, configuration is maintained. In critical cases, where RS is low and the battery state of the satellite 50 falls below 10%, the system triggers a coordinated failover, which is shared across modules.

Fig. 15 illustrates how the Al modules interact through a shared architecture and jointly control execution flows. The common attention fusion layer can ensure consistency across decisions, while individual scores are independently evaluated. However, all three Al modules share joint fallback conditions and harmonized execution paths, such that if any one module identifies an unstable state - e.g., HS < threshold, LS < 0.3, or RS < 0.7 - the system engages the 3GPP Rel-17 rules for handover, routing, and mobility robustness optimization (MRO).

### Use Case Example:

During a low-earth-orbit satellite pass over a rural region, a user device 10 begins to experience degrading RSRP due to orbital drift. The predictive-handover-Al module 120 detects the Doppler trend and computes HS > 0.7, indicating a need for imminent handover. At the same time, the load-balancing-Al module 130 registers increased terrestrial network utilization and reduced energy availability in the satellite 50, yielding LS ≈ 0.52. Meanwhile, the reconfiguration score RS from the configuration optimization module 140 also exceeds its threshold due to signal degradation and high latency. Together, these values trigger synchronized hardware-accelerated operations: a handover is executed via the gNode 180, traffic is partially offloaded to the LEO satellite 50, and beam tilt is adjusted by the RIS controller. The combined effect ensures uninterrupted service, optimal routing, and energy-aware operation - who all while maintaining fallback safety to 3GPP Rel-17 if one of the scores drops below the operational thresholds.

### Deployment Strategy of the Invention

The communication system 110, which includes the predictive-handover-Al module 120, the load-balancing-Al module 130, and the network-configuration-optimization-AI module 140, is designed to operate across a heterogeneous network infrastructure composed of terrestrial and non-terrestrial segments.

Within the non-terrestrial network 170, satellites 50 are deployed in low Earth orbit (LEO) to provide low-latency communication, in medium Earth orbit (MEO) to extend regional coverage, and in geostationary orbit (GEO) to support global service availability. These satellite segments provide both primary and supplementary connectivity, particularly in areas where terrestrial coverage is limited or intermittent.

The terrestrial network 160 includes base stations 180 installed in urban, suburban, and rural environments to enable high-throughput and low-latency communication. Edge servers 190 are positioned near the radio access network to enable real-time inference by the Al modules, ensuring that control signals such as handover trigger signals 121 or traffic offload commands can be generated and acted upon with minimal delay.

The system 110 is further supported by a cloud-based network management system, responsible for global optimization, and by centralized or federated training environments in which the Al models embedded in modules 120, 130, and 140 are prepared using real and synthetic datasets. High-performance computing resources are used for the initial training phases, and updates may be distributed via federated learning using the FL-API interface 230.

User equipment 10, including 5G/6G-compatible smartphones, loT nodes, and autonomous vehicles, form the endpoint of the system and provide essential input values 150 to the Al models. These input values may include QoS requirements, positional information, or uplink performance measurements.

### Deployment Locations:

The communication system 110 is deployed across multiple types of environments to ensure full coverage and service continuity.

In urban areas, the network includes a dense deployment of base stations 180 and edge servers 190. These nodes support high user density and allow Al-driven traffic optimization through interactions with LEO satellites 50, which may be used for offload during peak demand periods, as determined by the load-balancing-Al module 130.

In rural or remote locations where terrestrial infrastructure is sparse or absent, LEO and MEO satellites 50 serve as the primary access points. Edge servers 190 may be co-located at aggregation sites such as satellite gateways 200 to support localized decision-making by the Al modules. In such configurations, communication between the TN 160 and the NTN 170 can be facilitated via the TNI-AI interface 210 and the NTN-X2 interface 220.

For global coverage scenarios, including maritime, aviation, and remote sensor networks, GEO satellites 50 ensure uninterrupted connectivity. These links may be optimized by the network-configuration-optimization-AI module 140 to account for weather conditions, latency variations, and signal quality.

### Possible Integration with Existing 6G Networks:

The communication system 110 is designed for compatibility with existing and emerging 5G and 6G networks. Integration is achieved by exposing service-based interfaces that allow the Al modules to interact with both terrestrial and non-terrestrial components using standardized APIs, such as NEF and Namf_Communication, which are compatible with 3GPP service-based architecture. These APIs facilitate real-time data exchange and decision synchronization.

Control-plane integration is achieved through the use of protocol standards including SIP (Session Initiation Protocol) and MIP (Mobile IP), enabling Al-driven mobility control and predictive handover functionality. Extensions to these protocols allow for the inclusion of QoS-aware signaling, trajectory prediction, and decision-triggered routing updates.

The Al models implemented in modules 120, 130, and 140 are deployed across edge servers 190, base stations 180, and satellites 50. These models are trained and updated using federated learning techniques, which allow distributed nodes to refine their models using local data while periodically synchronizing with the central model through the FL-API interface 230. This approach ensures privacy preservation and responsiveness to local network conditions while maintaining consistency across the entire communication system 110.

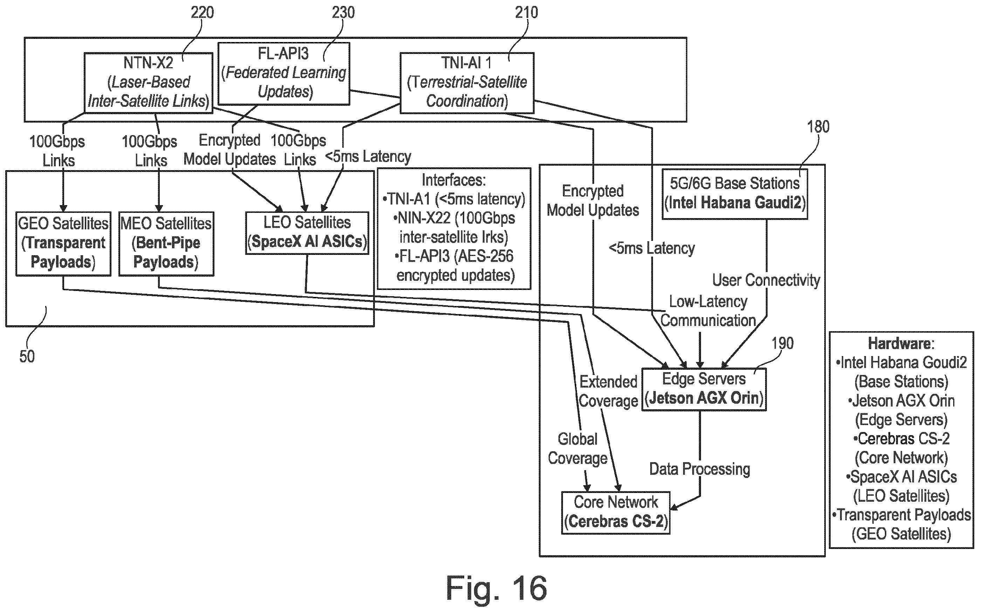

Fig. 16 illustrates a possible technical deployment of the invention in the communication system 110.

### Radiation Hardening

To ensure reliability of the communication system 110 under harsh space conditions, radiation hardening procedures were applied to all space-based hardware components, particularly those integrated into satellites 50 operating within the non-terrestrial network 170. The Xilinx Versal Al engines, which are used to execute Al models onboard LEO satellites 50, were subjected to comprehensive single-event upset (SEU) testing. These tests were carried out under simulated cosmic radiation environments following the MIL-STD-883 standard and resulted in an observed error rate of less than 1 × 10⁻¹² errors per bit per day. This demonstrates compliance with the operational requirements for radiation tolerance in low Earth orbit.

Thermal cycling tests were also conducted to validate operational resilience over the wide temperature ranges encountered during orbital transitions. The tests involved 1000 full thermal cycles between -55 °C and +125 °C, confirming the durability of the Al execution hardware under expected orbital temperature variations.

The onboard FPGA configuration used for Al processing is based on the Xilinx XQRVC1902-2MPFSVA2197 component, which is qualified under Jet Propulsion Laboratory Class A standards for use in space applications. This FPGA implementation includes a triple modular redundancy (TMR) scheme specifically applied to the attention weight storage and processing paths within the Al model architecture. This redundancy scheme ensures reliable operation even in the presence of transient radiation-induced faults.

Validation measurements demonstrated that, under nominal Earth-like operational conditions, the system achieved a bit error rate (BER) of 1 × 10⁻⁹ with a corresponding Al inference latency of approximately 50 microseconds. Under simulated solar flare exposure (100 krad), the system maintained functionality with a BER of 1 × 10⁻⁶ and an increased latency of 53 microseconds. These results confirm that the deployed Al modules maintain operational integrity and predictable performance even under radiation-induced stress conditions, making them suitable for long-duration use in low Earth orbit.

### Federated Learning for 5G and/or 6G Networks:

The Al-assisted communication system 110 incorporates a federated learning framework to enable distributed training of predictive models across network infrastructure elements, particularly satellites 50, edge servers 190, and terrestrial nodes 180. This architecture ensures user data privacy while facilitating global model optimization tailored to diverse network conditions.

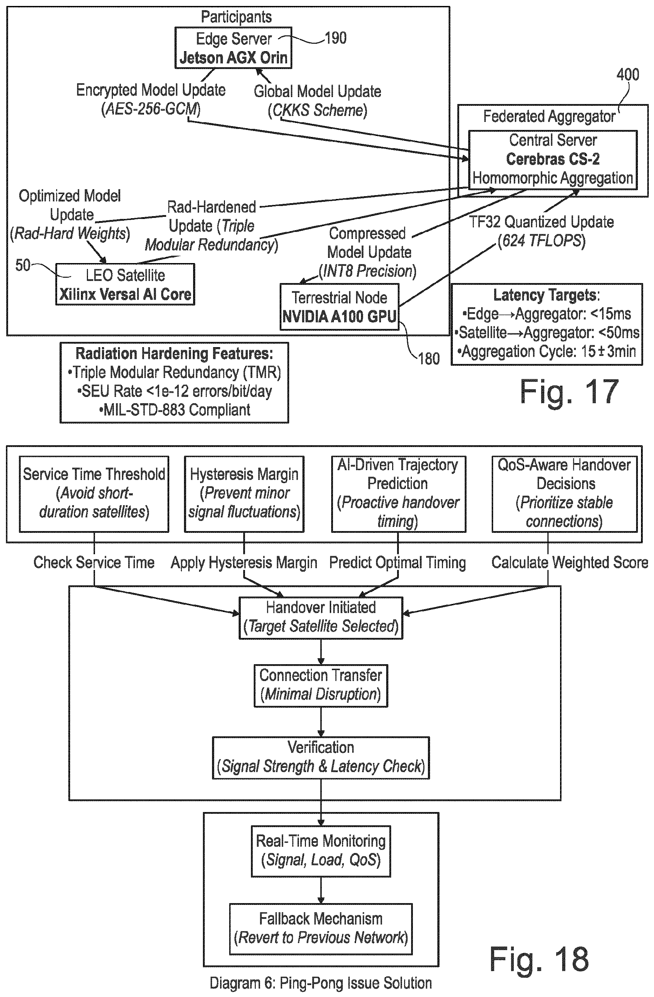

In the configuration shown in Fig. 17, edge servers 190 - such as those based on NVIDIA Jetson AGX Orin - serve as training participants. Each edge server executes localized model training using context-specific data, for example from connected user equipment 10 and local environment sensors. These trained models are then encrypted using AES-256-GCM encryption and forwarded as encrypted model updates to a central federated aggregator 400, which is implemented on a high-performance Cerebras CS-2 server. To ensure secure processing, the aggregator performs homomorphic aggregation of incoming models using the CKKS encryption scheme, thereby enabling computation on encrypted data without prior decryption.

LEO satellites 50, equipped with rad-hardened Xilinx Versal Al cores, also function as federated learning participants and provide data to the federated aggregator 400. These space-based nodes apply a triple modular redundancy (TMR) strategy to the model weights (i.e., "rad-hard weights") to ensure operational reliability in radiation-prone environments. The model updates generated by satellites 50 are subject to onboard radiation hardening processes, including SEU tolerance below 1 × 10⁻¹² errors per bit per day, and are compliant with MIL-STD-883.

Terrestrial nodes 180 such as NVIDIA A100 GPUs use INT8 quantization to compress the model update prior to transmission. Upon receipt at the central federated aggregator 400, all model updates are integrated and quantized into TF32 precision for global inference deployment. The aggregation process is optimized for low latency with performance targets as follows: edge-to-aggregator communication under 15 ms, satellite-to-aggregator communication under 50 ms, and a complete model aggregation cycle duration of 15 ± 3 minutes.

This distributed learning strategy supports operational adaptability under varying regional constraints. For instance, in a rural deployment scenario with limited terrestrial infrastructure, the edge server 190 trains a predictive handover model using data from user equipment 10 and regional satellite 50 connectivity. By processing environmental indicators such as Doppler shift, rain attenuation, and visibility of non-terrestrial network 170 resources, the locally optimized model adapts handover strategies to regional requirements. After encrypted transmission and homomorphic aggregation by central federated aggregator 400, a globally optimized and context-sensitive model can be redistributed to the participating nodes, thereby enhancing the network's collective performance and resilience.

### Addressing the Ping-Pong Issue:

The communication system 110 implements a dedicated strategy to mitigate ping-pong handovers, which are a well-known challenge in (LEO) satellite networks. Due to rapid orbital movement and dynamic link quality, user equipment 10 can be subject to frequent and unnecessary handovers between satellites 50. This behavior, known as the ping-pong effect, degrades service quality and increases both signaling overhead and energy consumption.

As shown in Fig. 18, the invention addresses this issue through a sequential handover decision framework that incorporates four interrelated modules.

First, a Service Time Threshold is applied. This mechanism prevents connections to satellites 50 expected to remain within range for only a short period. The threshold is dynamically adjusted based on real-time satellite ephemeris data and/or user equipment 10 mobility patterns. By excluding satellites with transient visibility, the system reduces unnecessary transitions.

Secondly, a Hysteresis Margin is enforced. This function introduces a stability margin into the signal quality comparison between the currently serving satellite and a potential handover target. The margin ensures that small or temporary signal fluctuations do not trigger a handover. Only when the target satellite provides a significantly improved signal - measured through RSRP metrics and Doppler-compensated indicators - will the handover process proceed.

The third mechanism is Al-Driven Trajectory Prediction. Leveraging modules such as the LSTM temporal branch described previously, the Al predicts the future position of satellites and anticipates disconnection events. By doing so, the Al proactively initiates handovers in a timely manner, rather than reacting to deteriorating link conditions.

The fourth element is QoS-Aware Handover Decisioning, which introduces service-level requirements into the handover policy. Specifically, the handover decision is computed using a weighted score derived from metrics such as signal strength, latency, network load, QoS priority, and service time. This scoring mechanism ensures that handovers are aligned with application-specific quality demands - favoring long-duration and low-latency links over transient ones.

As illustrated in Fig. 18, once all four criteria are applied - namely, checking the service time, applying hysteresis, predicting the optimal timing, and calculating the weighted score - the system determines whether to initiate a handover. If the weighted conditions are satisfied, a Handover is Initiated, with a Target Satellite Selected. The connection transfer process occurs next, designed for minimal disruption. The system then proceeds to Verification, in which signal strength and latency of the new link are validated.

Following a successful verification, the system enters a phase of Real-Time Monitoring, continuously observing key metrics such as signal quality, network load, and QoS compliance. If a degradation or failure is detected, a Fallback Mechanism is triggered. This allows the system to revert to the previous satellite connection or reroute to an alternative stable link.

Use Case 1: In a typical LEO network configuration, the system predicts that Satellite A will exit coverage within two minutes. The Al model identifies Satellite B, which offers a service time of 10 minutes, as a better alternative. The system preemptively performs the handover to Satellite B, thereby ensuring seamless connectivity and avoiding a reactive, late-stage switch that would result in service degradation.

Use Case 2: In a maritime application scenario, a ship traverses an area with frequent satellite transitions. The Al system integrates QoS requirements, ensuring handovers only occur if the target satellite provides at least a 5-minute service window and can maintain a round-trip latency below 50 milliseconds. This ensures stable connectivity for latency-sensitive applications, such as autonomous navigation or real-time video feeds.

The following references are fully incorporated into the disclosure of the invention:
1. 3GPP TR 38.811: "Study on New Radio (NR) to support non-terrestrial networks" (Section 6.3.4 discusses TN-NTN interworking)
2. 3GPP TR 38.874: "NR; Study on Al/ML for NR Air Interface" (Section 5.2.3 discusses Xn-Al extensions)
3. IEEE JSAC Special Issue (2024): "Federated Learning in 6G NTNs"
4. IEEE TAP 2023: "RIS-Assisted LEO Satellite Handovers
5. IEEE TNSM 2023: Hybrid architectures for NTN mobility management
6. ESA Technical Report, 2022: LSTM for LEO trajectory prediction
7. IEEE JSTARS 2023: SpaceNet Open Dataset

### Reference list

- 10: user equipment;
- 50: satellite;
- 100: computer-implemented method;
- 110: communication system;
- 120: predictive-handover-Al module;
- 121: handover trigger signal;
- 130: load-balancing-Al module;
- 140: network-configuration-optimization-AI module;
- 150: input values;
- 151: network load;
- 152: UE GPS position;
- 152: LEO satellite input values;
- 160: terrestrial network "TN";
- 170: non-terrestrial network "NTN";
- 180: base station;
- 190: edge server;
- 200: NTN Gateway;
- 210: TNI-AI interface;
- 220: NTN-X2 interface;
- 221: NTN-RIS interface;
- 230: FL-API interface;
- 240: RIS Controller;
- 330: alternative;
- 400: federated aggregator;

## Claims

1. A computer-implemented method (100) for managing a communication system (110) comprising a non-terrestrial network (170), NTN, and a terrestrial network (160), TN, the method comprising: implementing at least one of:
i) providing a predictive-handover-Al module (120) configured to receive a first set of input values (150) comprising user equipment (10) movement data, service time of a satellite (50) and/or satellite trajectory data, and to output handover parameters comprising a target access point and handover timing, and to provide a handover trigger signal (121) to the communication system (110) if the application of the handover parameters is determined to improve a network condition;
ii) providing a load-balancing-Al module (130) configured to receive a second set of input values (150) including network utilization (151), energy consumption, latency, service time, and/or Doppler shift values, and to output traffic offload parameters indicating an amount of data traffic to be redistributed between access points within the communication system (110), and to provide an offload signal if the application of the traffic offload parameters is determined to improve load balancing within the communication system (110); or
iii) providing a network-configuration-optimization-AI module (140) configured to receive a third set of input values (150) including power headroom, signal quality metrics, required quality-of-service, QoS, values and/or environmental data, and to output a set of reconfiguration parameters for the communication system (110) including at least one of: transmission power level, antenna tilt, beamforming direction, or routing path adjustment, and to provide a reconfiguration signal if the application of the reconfiguration parameters is determined to optimize the communication system (110).

2. The method of claim 1, wherein each of the predictive-handover-Al module (120), the load-balancing-Al module (130), and/or the network-configuration-optimization-Al module (140) is, in particular independently, trained on the combined NTN (170) and TN (160) to enable cross-network intelligence.

3. The method of any one of the preceding claims, wherein each Al-module (120, 130, 140) applies its respective output only if an improvement in at least one network condition is predicted, the network condition comprising at least one of: energy efficiency, signal quality, latency, load distribution, packet loss, or connection stability.

4. The method of any one of the preceding claims, wherein the output handover parameters also comprise, as predictive-Al-handover data: a signal strength, a latency, a QoS priority level, a service time, and/or a Doppler shift correction, wherein at least one of the additional predictive-Al-handover data is used in a handover-reward-function to calculate a predictive-handover score, and wherein the handover trigger signal (121) is provided if the predictive-handover score exceeds a predefined handover threshold;
wherein the output traffic-offload parameters also comprise, as predictive-Al-traffic-offload data: a network utilization (151), a latency, an energy consumption, and/or a satellite power depletion rate, wherein at least one of the additional predictive-AI-traffic-offload data is used in a load-balancing-reward-function to calculate a predictive-load-balancing score, and wherein the offload signal is provided if the predictive-load-balancing score exceeds a predefined load-balancing threshold; or
wherein the output reconfiguration parameters also comprise, as predictive-Al-reconfiguration data: a signal quality, an energy consumption, a network stability, and/or a weather impact factor, wherein at least one of the additional predictive-AI-reconfiguration data is used in a reconfiguration-reward-function to calculate a predictive-reconfiguration score, and wherein the reconfiguration signal is provided if the predictive-reconfiguration score exceeds a predefined reconfiguration threshold.

5. The method of claim 4, wherein the handover trigger signal (121) is provided if the predictive-handover score is higher than a current-handover score, the offload signal is provided if the predictive-load-balancing score is higher than a current-load-balancing score, or the reconfiguration signal is provided if the predictive-reconfiguration score is higher than a current-reconfiguration score, the current scores being calculated using the same reward functions but based on current network state values (150).

6. The method of any one of the claims 4 to 5, wherein at least one weight used in at least one of the scores is dynamically adjusted based on the assessed importance of the corresponding parameter.

7. The method of any one of the preceding claims, wherein the handover trigger signal (121) or offload signal initiates a data transition between access points selected from: the TN (160) to the NTN (170), the NTN (170) to the TN (160), the TN (160) to the TN (160), or the NTN (170) to the NTN (170).

8. The method of any one of the preceding claims, wherein:
the network-configuration-optimization-AI module (140) is configured to trigger the load-balancing-Al module (130) or the predictive-handover-Al module (120);
the load-balancing-Al module (130) is configured to trigger the network-configuration-optimization-Al module (140) or the predictive-handover-Al module (120) based on an assessment of available resources at alternative access points; or
the predictive-handover-Al module (120) is configured to trigger the load-balancing-Al module (130) or the network-configuration-optimization-AI module (140) in advance of a handover to optimize future target network conditions.

9. The method of any one of the preceding claims, wherein a current reward score is calculated based at least partially on currently measured system state values (150), a predictive reward score is calculated based on Al-predicted system state values, and an output signal is provided only if the predictive reward score exceeds the measured reward score.

10. The method of any one of the preceding claims, wherein the handover trigger signal (121) is provided only if at least one of the following conditions is fulfilled:
i) the predicted service time of the target access point exceeds a predefined or dynamically adjusted service time threshold; and/or
ii) the signal strength of the target access point exceeds the signal strength of the current access point by at least a hysteresis margin.

11. A handover control entity configured to implement a predictive-handover-Al module (120), the entity comprising a processor and a memory storing instructions which, when executed, cause the entity to:
receive input values (150) comprising user equipment (10) movement data, service time of a satellite (50) and/or satellite trajectory data;
output handover parameters comprising a target access point and handover timing;
and provide a handover trigger signal (121) if the application of the handover parameters is determined to improve a network condition.

12. A load control entity configured to implement a load-balancing-AI module (130), the entity comprising a processor and a memory storing instructions which, when executed, cause the entity to:
receive input values (150) including network utilization (151), energy consumption, latency, service time, and/or Doppler shift values;
output traffic offload parameters indicating an amount of data traffic to be redistributed;
and provide an offload signal if the application of the traffic offload parameters is determined to improve load balancing within a communication system (110).

13. A network optimization entity configured to implement a network-configuration-optimization-Al module (140), the entity comprising a processor and a memory storing instructions which, when executed, cause the entity to:
receive input values (150) including power headroom, signal quality metrics, required quality-of-service values and/or environmental data;
output reconfiguration parameters for a communication system (110) including at least one of: transmission power level, antenna tilt, beamforming direction, or routing path adjustment;
and provide a reconfiguration signal if the application of the reconfiguration parameters is determined to optimize the communication system (110).

14. A communication system (110) comprising at least one non-terrestrial network (NTN) (170), and at least one terrestrial network (TN) (160), the communication system (110) being configured to carry out the steps of the method according to any one of claims 1 to 10.

15. A computer program product comprising instructions which, when executed by one or more processors of a communication system (110) comprising a non-terrestrial network (170), and a terrestrial network (160), cause the system to implement an Al module configured to receive input values (150) associated with network state and user equipment (10) mobility, to generate control parameters for at least one of: handover, load balancing, or network configuration, and to provide a trigger signal to the communication system (110) if the application of the control parameters is determined to improve a network condition.
